Europäisches Patentamt

European Patent Office

Office européen des brevets

(19)

(11) **EP 0 461 030 B1**

(12) **FASCICULE DE BREVET EUROPEEN**

(45) Date de publication et mention
de la délivrance du brevet:
**14.01.1998 Bulletin 1998/03**

(51) Int Cl.6: **G06F 17/16**

(21) Numéro de dépôt: **91401467.5**

(22) Date de dépôt: **05.06.1991**

(54) **Procédé et circuit de traitement de vecteurs**

Verfahren und Anordnung zur Vektorverarbeitung

Vector processing circuit and method

(84) Etats contractants désignés:
**DE GB**

(30) Priorité: **08.06.1990 FR 9007164**

(43) Date de publication de la demande:
**11.12.1991 Bulletin 1991/50**

(73) Titulaire: **FRANCE TELECOM**
**75015 Paris (FR)**

(72) Inventeurs:
• **Jutand, Francis**
**F-94230 Cachan (FR)**
• **Lafage, Anne**
**F-75013 Paris (FR)**
• **Boutillon, Emmanuel**
**F-78400 Chatou (FR)**

(74) Mandataire: **Fréchède, Michel et al**
**Cabinet Plasseraud**
**84, rue d'Amsterdam**
**F-75009 Paris (FR)**

(56) Documents cités:
**EP-A- 0 186 958      EP-A- 0 237 204**
**EP-A- 0 269 995      US-A- 3 763 365**
**US-A- 4 697 247**

**Description**

La présente invention est relative à un procédé et à un circuit de traitement de signaux numériques représentatifs de vecteurs ou tuples de même dimension, et à leur application à des ensembles de cardinalité et à des vecteurs ou tuples de dimensions quelconques.

Dans le domaine du calcul scientifique, le traitement de signaux numériques représentatifs de vecteurs ou tuples est actuellement basé sur l'utilisation de supercalculateurs travaillant à haut débit mais de façon séquentielle sur les données à traiter. Plus généralement, des machines vectorielles ou parallèles ou des machines connues sous le vocable anglo-saxon de "array processors" sont utilisées. Dans le but de l'utilisation de fortes puissances de calcul spécialisées implantées dans un ou plusieurs circuits V L S I, des architectures de type systolique ont été proposées pour des machines d'usage général telles que la machine proposée par l'Institute Carnegie Mellon aux Etats-Unis d'Amérique sous la dénomination WARP, et le circuit intégré dérivé annoncé par la Société INTEL sous la dénomination iWARP.

US-A-4697247 décrit l'utilisation de circuits dédiés travaillant en parallèle pour effectuer le produit matriciel.

Parmi les circuits à architecture de type systolique, on peut encore citer les réseaux neuronaux lesquels ont donné lieu à des architectures du type précité monodimensionnelles (SY Kung).

Pour la mise en oeuvre de bases de données d'autres architectures de circuit ont été proposées, en particulier l'architecture désignée sous le nom de RAPID, laquelle a fait l'objet de la demande de brevet US n° 061642 aux noms de P. Fandemay, D. Etiemble et H. He, publiée dans US-A-5239663.

Les solutions précitées de l'art antérieur basées soit sur l'utilisation de nombreux circuits dédiés travaillant en parallèle, soit sur l'utilisation de supercalculateurs nécessitant l'utilisation d'un grand nombre de processeurs et de mémoires à haute performance conduisent à des solutions très coûteuses. L'augmentation croissante du degré d'intégration permet, à l'heure actuelle d'implanter couramment sur un seul circuit des puissances de calcul correspondant à plusieurs milliards d'opérations spécialisées par seconde, par la mise en parallèle à l'intérieur d'un circuit de nombreux processeurs.

Ces circuits, afin de fonctionner, nécessitent d'être alimentés à la fois par des opérandes et/ou des coefficients. Lorsque ces coefficients sont en nombre réduit et lorsque les données sont réutilisées un grand nombre de fois, comme dans les applications de filtrage par exemple, des architectures à base de stockage interne et de structures systoliques sont des solutions convenables.

Le problème se pose par contre lorsque la taille des objets informatiques à traiter, tableau ou liste, croît et qu'en conséquence il devient peu efficace, voire impossible de stocker les coefficients ou les données en interne, c'est-à-dire dans le circuit lui-même.

Si l'on souhaite alors alimenter les processeurs de calcul que l'on peut mettre dans un des circuits précités, il est nécessaire d'augmenter le débit de communication avec les mémoires externes par une augmentation du nombre de pattes de connexion du circuit et de la fréquence de liaison et d'échange avec ces mémoires.

Outre la solution précitée, il est possible de prévoir l'utilisation de mémoires cachés dans ces circuits.

Cependant, les limitations des solutions actuelles correspondantes proviennent d'une mauvaise organisation des calculs ce qui conduit, du fait d'un mauvais équilibrage, à des "overhead" ou dépassements temporels, soit à une perte d'efficacité d'utilisation de la puissance de calcul installée ou à un surcroît de surface de mémorisation nécessaire, ce qui, en dernier ressort, provoque une sous utilisation des ressources.

La présente invention a pour objet de remédier aux inconvénients précédemment cités et notamment de tirer partie du potentiel technologique actuel des processeurs et des mémoires vives afin de permettre la mise en oeuvre d'implantations en circuits intégrés de processeurs parallèles à très forte puissance de calcul, mais bon marché, susceptibles de plus de fonctionner avec des mémoires à très haute densité d'intégration (DRAM) mais à vitesse d'accès moyenne, de l'ordre de 80 ns, de façon à diminuer les coûts globaux résultant.

Le procédé de traitement de signaux numériques représentatifs de vecteurs ou tuples de même dimension p objet de la présente invention, ce traitement devant être effectué entre couples de vecteurs $X_i$ de composantes $\{x_{ki}\}$ d'un premier ensemble de vecteurs R et de vecteurs $Y_i$ de composantes $\{y_{ki}\}$ d'un deuxième ensemble de vecteurs S, ce traitement consistant à réaliser une rencontre des couples de vecteurs $X_i, Y_i$ en vue d'effectuer une mise en présence des composantes de même ordre k $\{x_{ki}\}$ ; $\{y_{ki}\}$ et un calcul sur ces composantes, est remarquable en ce qu'il consiste à attribuer à l'un des ensembles de vecteurs R la qualité de données spatiales de rencontre, correspondant à une succession temporelle de vecteurs de données spatiales de rencontre $R_k$ formés soit par les vecteurs $X_i$ ou leurs composantes $\{x_{ki}\}$ soit par un arrangement de ces vecteurs $X_i$ ou de leurs composantes. A l'autre ensemble de vecteurs S est attribuée la qualité de données d'entrée, ces données d'entrée étant formées à partir d'au moins un vecteur $Y_i$ de l'autre ensemble de vecteurs S ou par leurs composantes $\{y_{ki}\}$ correspondantes. Une rencontre spatiale et temporelle des données d'entrée et des données spatiales de rencontre est effectuée selon un traitement parallèle, ce traitement parallèle étant organisé selon un réseau bidimensionnel. A l'une des dimensions x de ce réseau bidimensionnel est affectée la succession temporelle de vecteurs de données spatiales de rencontre $R_k$ et à l'autre dimension y de

EP 0 461 030 B1

ce réseau bidimensionnel sont affectées les données d'entrée formées par le ou les vecteurs Yi ou par ses composantes {yki} .

Le circuit de traitement de signaux numériques représentatifs de vecteurs ou tuples de même dimension p, conformément au procédé précité, est remarquable en ce qu'il comprend d'une part, des premiers moyens de mémorisation de l'un des ensembles de vecteurs R sous forme de données spatiales de rencontre, ces données spatiales de rencontre mémorisées étant susceptibles d'être lues selon une succession temporelle de vecteurs de données spatiales de rencontre Rk formés soit par les vecteurs Xi ou leurs composantes {xki} soit par un arrangement de ces vecteurs ou de leurs composantes, et, d'autre part, des deuxièmes moyens de mémorisation de l'autre ensemble de vecteurs S sous forme de données d'entrée, ces données d'entrée étant formées à partir d'au moins un vecteur Yi de l'autre ensemble S de vecteurs ou de leurs composantes {yki} correspondantes. Des moyens de calcul sont prévus afin de permettre d'effectuer une rencontre spatiale et temporelle des données d'entrée et des données spatiales de rencontre selon un traitement parallèle. Les moyens de calcul sont constitués en un réseau bidimensionnel de cellules de traitement des composantes {xki} respectivement {yki} , la succession temporelle de vecteurs de données spatiales de rencontre étant affectée à l'une des dimensions x du réseau bidimensionnel et les données d'entrée étant affectées à l'autre dimension y de ce réseau.

Le procédé et le circuit objets de la présente invention peuvent être utilisés dans toutes les applications mettant en jeu de grosses structures de données telles que le calcul vectoriel, le calcul matriciel, et enfin les bases de données dans lesquelles sont mises en jeu des données présentant un minimum de régularité ou de stationnarité autorisant l'introduction d'une réutilisation temporelle de ces données.

Le procédé et le circuit objets de la présente invention seront mieux compris à la lecture de la description et à l'observation des dessins ci-après dans lesquels :

- la figure 1 en ses points a), b) et c) représente un schéma illustratif de la mise en oeuvre du procédé objet de l'invention,
- la figure 2 en ses points a) et b) représente deux schémas illustratifs du processus de rencontre de vecteurs d'un premier ensemble R et d'un deuxième ensemble S de vecteurs,
- la figure 3 représente un premier mode de réalisation avantageux non limitatif d'un circuit objet de l'invention de type présentation séquentielle-distribution parallèle,
- la figure 4 représente un deuxième mode de réalisation avantageux non limitatif d'un circuit objet de l'invention de type présentation parallèle-distribution parallèle,
- la figure 5a représente une généralisation du procédé objet de l'invention tel que représenté en figure 1 point a),
- la figure 5b représente un schéma illustratif d'une généralisation du procédé objet de l'invention à des ensembles de vecteurs de cardinalité quelconque,
- la figure 5c représente un schéma illustratif d'une généralisation du procédé objet de la présente invention à des vecteurs de dimension quelconque,
- la figure 5d représente une généralisation du procédé objet de l'invention du fait de l'utilisation d'une pluralité de réseaux bidimensionnels, constitués en opérateurs, fonctionnant en parallèle,
- la figure 5e représente une généralisation du procédé objet de l'invention du fait de l'utilisation d'une pluralité de réseaux bidimensionnels, constitués en opérateurs, fonctionnant en cascade,
- la figure 5f représente un organigramme relatif au procédé objet de l'invention permettant le traitement d'ensembles R,S de vecteurs ou tuples de cardinalité différente quelconque,
- la figure 6 en ses points a), b) et c) est relative à un mode de réalisation particulier du circuit selon l'invention orienté vers un traitement de type produit matrice-vecteur,
- la figure 7a est relative à un autre mode de réalisation particulier du circuit selon l'invention plus particulièrement destiné à un traitement de type produit matrice-vecteur, dans le cas d'une matrice carrée de très grande dimension,
- la figure 7b est relative à un autre mode de réalisation particulier du circuit selon l'invention plus particulièrement destiné à un traitement de type produit matrice-vecteur dans le cas d'une matrice rectangulaire comportant au moins une grande dimension,
- la figure 8a représente un autre mode de réalisation particulier du circuit objet de la présente invention plus particulièrement destiné au traitement de tuples multi attributs d'une base de données,
- la figure 8b représente un détail de réalisation non limitatif d'un processeur élémentaire utilisé dans la configuration du circuit tel que représenté en figure 8a,
- la figure 8c représente, en ses étapes 1,2 et 3, le mode opératoire d'un processeur élémentaire tel que représenté en figure 8b,
- la figure 9 représente un système de traitement de données numériques utilisant une pluralité de circuits conformes à l'objet de la présente invention, ces circuits fonctionnant en parallèle afin d'augmenter la cardinalité des ensembles de vecteurs ou tuples traités sans augmenter le débit de transmission des données entre mémoire de masse externe au circuit et circuit proprement dit.

3

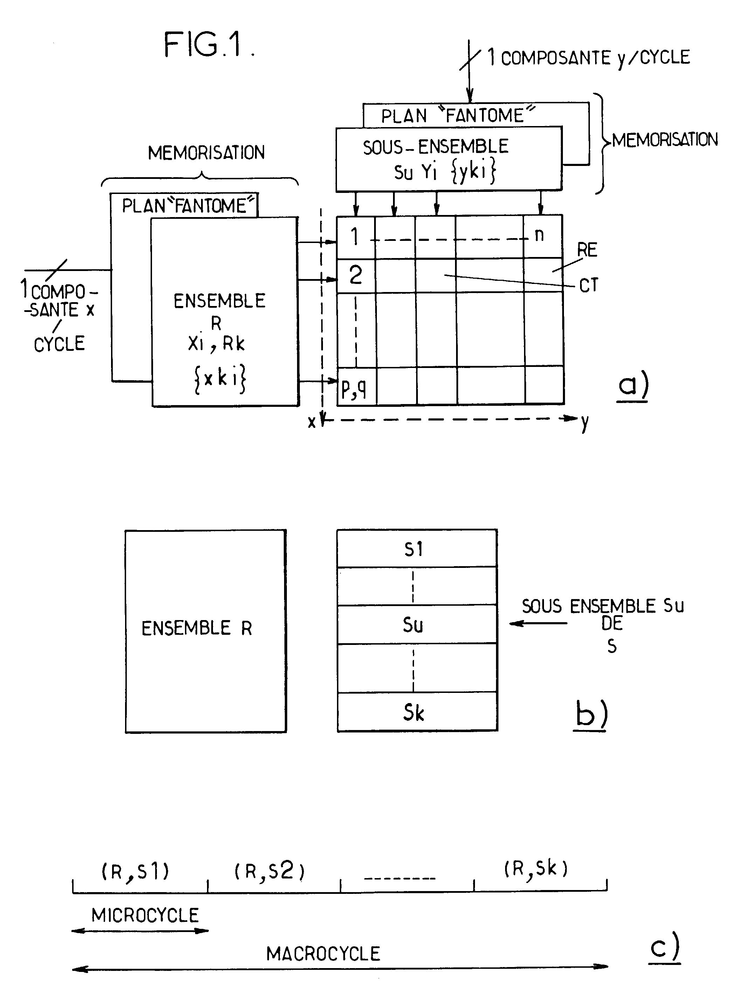

Le procédé objet de la présente invention sera tout d'abord décrit en liaison avec la figure 1 aux points a), b) et c) de celle-ci. On notera toutefois que dans l'ensemble de la description ci-après les mêmes références relatives aux différentes figures représentent les mêmes éléments.

Selon l'invention, le procédé de traitement de signaux numériques représentatif de vecteurs ou tuples de même dimension p, le traitement devant être effectué entre couples de vecteurs Xi de composantes {xki} d'un premier ensemble de vecteurs R et de vecteurs Yi de composantes {yki} d'un deuxième ensemble de vecteurs S, ce traitement consistant à réaliser une rencontre des couples de vecteurs Xi,Yi en vue d'effectuer une mise en présence des composantes de même ordre k {xki}; {yki} et un calcul sur ces composantes consiste, ainsi que représenté en figure 1 au point a), à attribuer à l'un des ensembles de vecteurs R la qualité de données spatiales de rencontre correspondante à une succession temporelle de vecteurs de données spatiales de rencontre, ces vecteurs étant notés Rk. Les vecteurs de données spatiales de rencontre sont formés soit par les vecteurs Xi ou par leurs composantes {xki}, soit par un arrangement des vecteurs Xi précités ou de leurs composantes.

A l'autre sous-ensemble de vecteurs S est attribuée la qualité de données d'entrée, ces données d'entrée étant formées à partir d'au moins un vecteur Yi de l'autre ensemble de vecteurs S ou d'un sous-ensemle Su donné, les données d'entrée pouvant être formées à partir des composantes {yki} correspondantes des vecteurs Yi précités.

Le procédé objet de la présente invention consiste alors à effectuer une rencontre spatiale et temporelle des données d'entrée et des données spatiales de rencontre selon un traitement parallèle. Le traitement parallèle est organisé, ainsi que représenté en figure 1 au point a) selon un réseau bidimensionnel noté RE de cellules de traitement des composantes {xki} respectivement {yki} .

Ainsi qu'on l'a représenté d'ailleurs en figure 1 au point a) précité, à l'une des dimensions x du réseau bidimensionnel RE est affectée la succession temporelle de vecteurs de données spatiales de rencontre Rk et à l'autre dimension y du réseau bidimensionnel sont alors affectées les données d'entrée formées par au moins un vecteur Yi ou par ses composantes correspondantes {yki}.

Dans le procédé objet de l'invention, l'opération que l'on considère est la rencontre de deux ensembles notés R, S de vecteurs de même dimension. Par rencontre de deux ensembles de vecteurs on entend que chacun des vecteurs de l'ensemble R doit rencontrer tous les vecteurs de l'ensemble S. Un calcul est effectué sur les composantes de même ordre des deux vecteurs pris deux à deux et le résultat de la rencontre est finalement fonction de tous les résultats intermédiaires obtenus sur les composantes précitées.

Conformément au procédé objet de l'invention, le traitement parallèle des données spatiales de rencontre et des données d'entrée est effectué selon un réseau bidimensionnel noté RE de cellules de traitement des composantes des vecteurs précités. Chaque cellule de traitement notée CT permet ainsi la rencontre de plusieurs vecteurs de l'ensemble R et de plusieurs vecteurs de l'ensemble S. Chaque cellule de traitement effectue le calcul composantes à composantes.

On notera que de manière avantageuse, les vecteurs de l'ensemble R ou de l'ensemble S sont mémorisés séparément, qu'en outre les vecteurs correspondants de l'ensemble R et de l'ensemble S en cours de traitement sont mémorisés de façon à être en liaison directe avec le réseau bidimensionnel RE alors que ces mêmes ensembles R et S comportant d'autres vecteurs, non encore soumis au traitement, peuvent avantageusement être mémorisés pendant le traitement en cours des vecteurs correspondants précités, afin de préparer le contexte de calcul suivant.

Dans ce but, l'ensemble S, ainsi que représenté au point b) de la figure 1, peut être partitionné en plusieurs sous-ensembles de même taille, chaque sous-ensemble étant noté Su.

Après une phase d'initialisation on considère l'ensemble R et le sous-ensemble S1 chargé et mémorisé pour constituer les vecteurs soumis au traitement précité.

Ainsi que représenté au point c) de la figure 1, la phase de calcul qui permet d'effectuer la rencontre des ensembles R et S se décompose alors en une succession de périodes égales appelées microcycles. Un microcycle correspond à la rencontre d'un sous-ensemble Su de S avec l'ensemble R, et le chargement en parallèle du sous-ensemble Su+1 pour constituer le contexte suivant du microcycle suivant. A la fin du traitement du sous-ensemble Su le contexte du microcycle suivant est prêt.

Ainsi que représenté au point c) de la figure 1, chaque microcycle correspond donc à la rencontre de l'ensemble R des vecteurs et d'un sous-ensemble Su considéré.

De même conformément au procédé objet de l'invention, on définit une période appelée macrocycle laquelle correspond à la rencontre de tous les ensembles Su de S, avec u variante de 1 à K par exemple, avec l'ensemble R et le chargement simultané d'un nouvel ensemble R' et d'un premier sous-ensemble S'1 d'un autre ensemble de vecteurs de données d'entrée S'. De même, à la fin d'un macrocycle, le contexte du macrocycle suivant est prêt.

Conformément au procédé objet de l'invention, il est ainsi possible de définir une hiérarchie de période de traitement. Deux ensembles R et S de cardinalité ou taille très élevée peuvent ainsi être divisés en sous-ensembles Rv et Su de taille identique mais plus faible. Le macrocycle correspond alors à la rencontre de deux sous-ensembles Rv et Su. Chaque sous-ensemble Su doit être partitionné en sous-ensembles Sub, et la rencontre entre vecteurs de sous-ensembles Sub et Rv correspond à un microcycle. La rencontre des ensembles R et S nécessite ainsi une succession de macrocycles.

On notera que le procédé objet de l'invention est particulièrement avantageux car ce procédé permet d'assurer un traitement de vecteurs ou tuples dans lequel la taille en nombre de vecteurs des ensembles R et S ne conditionne pas celle des unités de mémorisation correspondante. D'autre part, conformément au procédé objet de l'invention, les tailles des ensembles R et S peuvent être différentes. Il suffit bien entendu de constituer dans chacun des ensembles R et S précités des sous-ensembles Rv et Su de même taille ou cardinalité.

Conformément à un aspect avantageux du procédé objet de l'invention, les données d'entrée sont formées à partir de n vecteurs Yi avec i appartenant à [1,n]. A l'autre dimension y du réseau bidimensionnel RE de cellules de traitement sont affectées les composantes {yki} formant un vecteur de données d'entrée. Le réseau bidimensionnel de cellules de traitement comporte alors n cellules de traitement selon l'autre dimension y précitée.

De la même façon, chaque vecteur de données spatiales de rencontre Rk peut être formé par un vecteur Xi de dimension p. Dans ce cas, à la dimension x du réseau bidimensionnel RE de cellules de traitement notées CT sont affectées les composantes {xki} formant le vecteur de données spatiales de rencontre Rk. Le réseau bidimensionnel RE de traitement comporte selon la dimension x précitée p cellules de traitement CT.

Selon une variante du procédé objet de l'invention, chaque vecteur de données spatiales de rencontre Rk peut être formé par un arrangement des composantes {xki} d'une pluralité de q vecteurs Xi avec i appartenant [1,q]. La suite temporelle de données spatiales de rencontre Rk est alors formée par les composantes {xki} des vecteurs Xi. Dans ce cas le réseau bidimensionnel RE de traitement comporte, selon la dimension x,q cellules de traitement.

En ce qui concerne l'organisation du réseau bidimensionnel RE on notera que dans le cas où celui-ci comporte n.p cellules de traitement CT arrangées en p lignes et n colonnes, selon une première variante de réalisation non limitative, le procédé objet de l'invention peut consister à conduire la rencontre entre deux vecteurs Xi,Yi dans une colonne des cellules de traitement précitées. Chaque cellule de traitement CT délivre alors à la cellule de traitement d'ordre immédiatement supérieur de la même colonne un résultat de traitement intermédiaire. La cellule de traitement d'ordre p de chaque colonne délivre alors un résultat de traitement final pour un couple de vecteurs Xi,Yi donné.

Selon une autre variante de mise en oeuvre du procédé objet de l'invention, lorsque le réseau bidimensionnel RE comporte n.q cellules de traitement arrangées en q lignes et n colonnes, la rencontre entre deux vecteurs Xi,Yi peut être conduite localement au niveau d'une cellule de traitement par traitement des p composantes correspondantes {xki} ,{yki} .

Les deux modes de réalisation et de mise en oeuvre de la rencontre entre vecteurs précédemment décrits ne préjugent pas de modes de mise en oeuvre différents. Parmi ces modes de réalisation on peut inclure toute présentation parallèle-distribution séquentielle ou réciproquement.

D'une manière plus générale on notera que les données susceptibles d'être traitées conformément au procédé objet de l'invention sont des données organisées en tableaux de vecteurs. La taille des tableaux et la dimension des vecteurs concernés peuvent être très élevées.

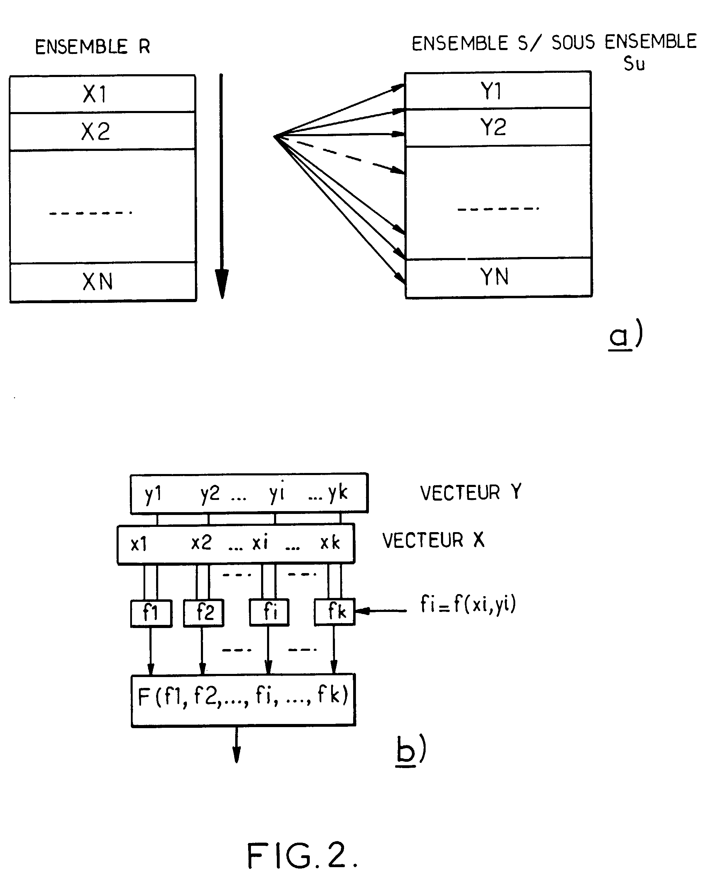

En ce qui concerne les opérations effectuées par le réseau de traitement RE on rappelle, ainsi que représenté en figure 2 aux points a) et b), que la rencontre de deux ensembles ou tableaux de vecteurs de même dimension se traduit par la rencontre de chacun des vecteurs d'un ensemble avec tous les vecteurs de l'autre ensemble. La rencontre précitée se traduit ainsi premièrement par le calcul d'une fonction sur les paires de composantes de même rang k, le résultat de la rencontre étant fonction des résultats obtenus sur les paires de composantes précitées. Sur les figures 2a et 2b le calcul de la fonction mentionné est noté f1, f2, fi, fk.

On notera que le procédé objet de la présente invention met en oeuvre l'utilisation d'un parallélisme de calculs à la fois dans les dimensions spatiales et temporelles de façon à augmenter le taux de réutilisation des informations introduites dans le réseau bidimensionnel RE. Les termes "spatiales" et "temporelles" sont empruntés initialement à des applications ou l'un des ensembles de données est inhérent au problème. On peut ainsi appeler ces données les données du problème, ces données étant constituées par exemple par une matrice de coefficients dans une application de calculs matriciels. L'autre ensemble est alors constitué par les données à traiter que l'on appelle ainsi les données d'entrée.

Ainsi le terme parallélisme spatial signifie qu'un vecteur d'entrée rencontre parallèlement plusieurs vecteurs de données spatiales de rencontre.

Le terme parallélisme temporel signifie que plusieurs vecteurs d'entrée sont traités en parallèle.

Par commodité on étend l'utilisation de ces termes à d'autres applications mettant en jeu deux ensembles de données et dans lesquelles on ne distingue pas à priori de données particulières au problème ni de données d'entrée. Il est toutefois avantageux de qualifier de la sorte les données précitées de façon à polariser l'application correspondante. C'est en particulier le cas des applications du procédé objet de l'invention relatives aux bases de données.

Le procédé objet de la présente invention met également en oeuvre un équilibrage des zones spatiales et temporelles de travail précédemment définies, ceci afin d'obtenir un minimum de stockage interne pour réserver le maximum de surface de circuit intégré disponible pour le calcul proprement dit et pour diminuer la bande passante du flux de données transmises ou reçues via des mémoires de stockage des données externes.

Dans la pratique, les deux caractéristiques précédemment mentionnées se traduisent, d'une part, par une organisation particulière du calcul permettant d'utiliser les deux types de parallélisme, les calculs précités étant séquencés ainsi que décrit précédemment en microcycles et macrocycles, et, d'autre part, par une famille de circuits permettant l'implantation de l'organisation des calculs précités. De même, la taille ou capacité des unités nécessaire à la mémorisation des ensembles de vecteurs R ou sous-ensembles Su de l'ensemble S est fixée par équilibrage, ce qui permet ainsi d'avoir une bande passante minimum avec les mémoires externes sans sous utiliser la puissance de calcul intégrée sur le circuit objet de la présente invention.

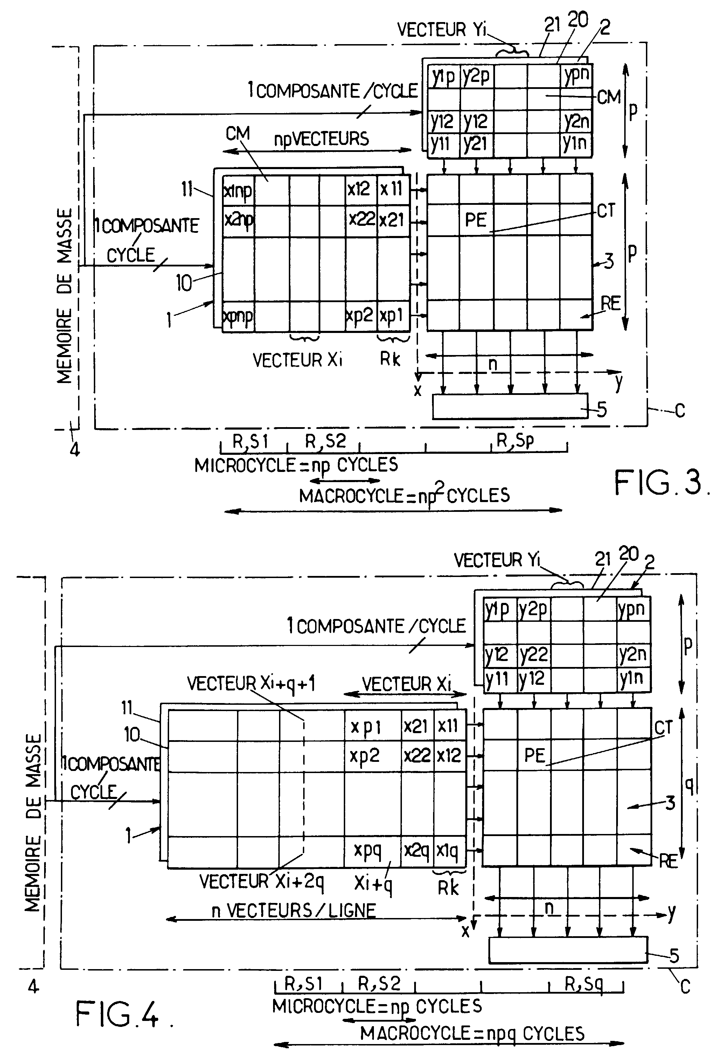

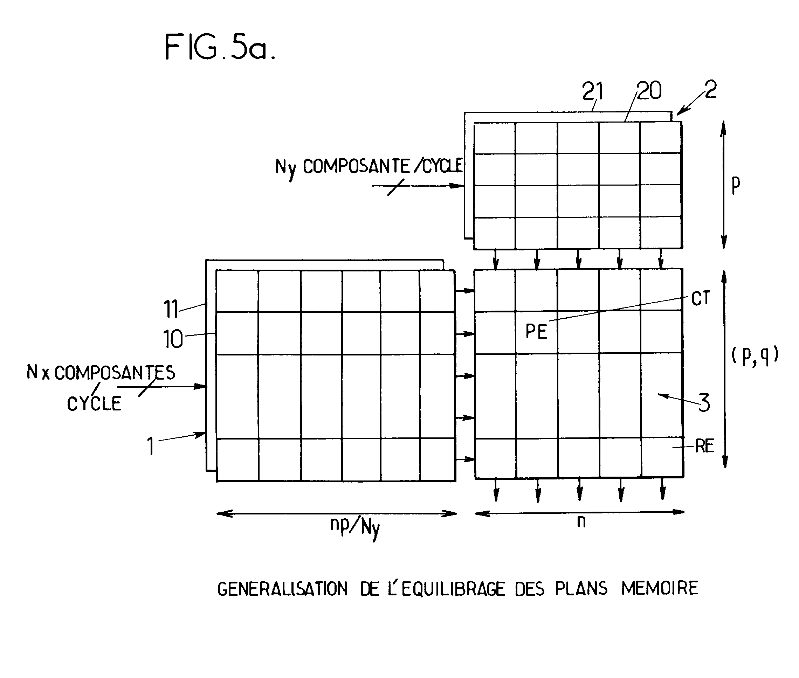

Une description plus détaillée d'un circuit de traitement de signaux numériques représentatifs de vecteurs ou tuples de même dimension p conformément au procédé objet de la présente invention sera maintenant donnée en liaison avec les figures 3 et 4.

Selon les figures précitées, le circuit objet de l'invention, noté C et dont le périmètre est délimité par un trait mixte, comprend une première unité de mémorisation 1 de l'un des ensembles de vecteurs R sous forme de données spatiales de rencontre. Ces données spatiales de rencontre sont mémorisées de façon à être lues selon une succesion temporelle de vecteurs de données spatiales de rencontre Rk. Ces vecteurs sont formés soit par les vecteurs Xi ou leurs composantes {xki}, soit par un arrangement de ces vecteurs Xi ou de leurs composantes ainsi qu'il sera décrit ultérieurement dans la description.

En outre, le circuit objet de la présente invention comporte une deuxième unité de mémorisation 2 de l'autre ensemble de vecteurs S sous forme de données d'entrée. Ces données d'entrée sont formées à partir d'au moins un vecteur Yi de l'autre ensemble S de vecteurs ou de leurs composantes {yki} correspondantes. On comprendra en effet que les données d'entrée, ainsi que décrit précédemment, peuvent être constituées par tout sous-ensemble Su de l'ensemble S.

En outre, ainsi qu'on l'a représenté sur les figures 3 et 4 précédemment mentionnées, une unité active de calcul 3 permet d'effectuer une rencontre spatiale et temporelle des données d'entrée et des données spatiales de rencontre selon un traitement parallèle dans les conditions précédemment définies. On notera que l'unité active de calcul 3 est constituée en un réseau bidimensionnel RE de cellules de traitement des composantes {xki} ou respectivement {yki}, la succession de vecteurs de données spatiales de rencontre Rk étant affectée à l'une des dimensions x du réseau bidimensionnel et les données d'entrée étant affectées au contraire à l'autre dimension y de ce réseau.

Ainsi qu'on l'a en outre représenté en figure 3 et 4, les première 1 et deuxième 2 unités de mémorisation comportent chacune un plan mémoire de travail noté 10 respectivement 20 dans lequel est mémorisé un sous-ensemble de vecteurs correspondant en cours de traitement. Le plan mémoire de travail 10,20 est directement interconnecté selon une interconnexion parallèle aux cellules de traitement CT du réseau bidimensionnel selon la dimension d'affectation x respectivement y des données correspondantes.

Les première 1 et deuxième 2 unités de mémorisation comportent également un plan mémoire fantôme noté 11 respectivement 21 interconnectés d'une part à une mémoire de masse 4 et d'autre part respectivement au plan mémoire de travail 10,20. On notera que le plan mémoire fantôme 11,21 agit comme mémoire auxiliaire du plan mémoire de travail pour un sous-ensemble de vecteurs correspondant d'ordre supérieur pendant le traitement du sous-ensemble de vecteurs correspondant. Ainsi, les plans de mémoire de travail et plans fantôme 10,11 respectivement 20,21 sont identiques et peuvent successivement jouer le rôle de plans de travail respectivement plan fantôme sur simple commutation. La mémoire de masse 4 est représentée en traits pointillés et est donc externe au périmètre du circuit C représenté en figure 3 et 4.

Au cours du fonctionnement, le circuit objet de la présente invention ainsi que représenté en figure 3 ou 4 est tel que la taille des plans mémoire de l'ensemble S, dans lequel est en fait chargé le sous-ensemble Su, en particulier le plan fantôme correspondant 21 peut être chargé en totalité pendant la durée d'un microcycle avec un débit de une composante de vecteur par cycle d'horloge, alors que la taille des plans mémoire de l'ensemble R plans de travail 10 respectivement plan fantôme 11 est tel que le plan fantôme peut être chargé en totalité pendant la durée d'un macrocycle avec le même débit de une composante de vecteur par cycle d'horloge.

D'autre part, la relation entre la taille de l'unité active de calcul 3, en nombre de cellules de traitement CT, et celle des plans mémoire est telle que celle-ci n'a jamais à attendre que le contexte d'un microcycle ou d'un macrocycle soit considéré comme prêt.

On notera en outre qu'en ce qui concerne l'unité active de calcul 3 celle-ci comprend une pluralité de processeurs élémentaires notés PE constituant en fait les cellules de traitement CT. Le réseau bidimensionnel RE est alors organisé en une aire rectangulaire permettant d'assurer la rencontre d'une pluralité de vecteurs du premier ensemble R et d'une pluralité de vecteurs du deuxième ensemble S.

En ce qui concerne l'organisation du plan mémoire de travail 20 et du plan mémoire fantôme 21 de la deuxième unité de mémorisation 2, on notera que ces derniers permettant la mémorisation d'un sous-ensemble de vecteurs Su de l'autre ensemble de vecteurs S est réalisée de façon à permettre une mémorisation des composantes {yki} des vecteurs Yi correspondants dans des cellules de mémoire notées CM selon un adressage en lignes et colonnes. Chaque vecteur Yi est alors mémorisé sur une colonne ainsi que représenté en figure 3 et 4. Le plan mémoire de travail 20 et le plan fantôme 21 comportent alors n colonnes pour assurer la mémorisation de n vecteurs Yi, chaque ligne comportant n composantes {yki} constituant les données d'entrée précédemment mentionnées.

Une description plus détaillée de deux modes de réalisation non limitatifs d'un circuit conforme à l'objet de la présente invention sera donnée en liaison avec les figures 3 et 4 respectivement, relativement à une première configuration de type présentation séquentielle-distribution parallèle et à une deuxième configuration de type présentation parallèle-distribution parallèle.

On notera que les désignations de présentation séquentielle-distribution parallèle concernent respectivement la présentation séquentielle des données spatiales de rencontre constituées par les vecteurs Rk précédemment mentionnés, ces vecteurs étant introduits séquentiellement à raison d'un vecteur par unité de temps correspondant à une ou plusieurs impulsions d'horloge de séquencement du circuit objet de l'invention. Bien entendu, les circuits d'horloge délivrant les signaux d'horloge correspondants ne sont pas représentés sur les figures 3 et 4.

De la même manière, les désignations présentation parallèle-distribution parallèle désignent une présentation parallèle des vecteurs Rk constitutifs des données spatiales de rencontre, ces vecteurs étant au contraire, dans ce deuxième mode de réalisation, introduits en parallèle dans l'unité active de traitement 3, ainsi qu'il sera décrit ultérieurement dans la description.

Dans les deux modes de réalisation, on notera que la désignation distribution parallèle concerne la distribution des résultats de calcul, ces résultats étant distribués en parallèle par les processeurs élémentaires PE constitutifs de la dernière ligne x constitutive du réseau bidimensionnel RE précédemment décrit.

Le premier mode de réalisation selon la première configuration de type présentation séquentielle-distribution parallèle sera tout d'abord décrit en liaison avec la figure 3.

Dans la configuration précitée, le réseau bidimensionnel RE comprend n.p processeurs élémentaires arrangés en p lignes et n colonnes. Chaque cellule mémoire CM de la première ligne du plan mémoire de travail 20 est interconnectée à toutes les cellules de traitement CT, et au processeur élémentaire PE correspondant par l'intermédiaire d'un BUS. Le plan mémoire de travail 10, dans lequel sont mémorisés les vecteurs données spatiales de rencontre Rk, est organisé de façon à réaliser une mémorisation des composantes {xki} des vecteurs Xi correspondants dans des cellules mémoire selon un adressage en lignes et colonnes. Chaque vecteur Xi est mémorisé sur une colonne, un vecteur de données spatiales de rencontre Rk correspondant ainsi à un vecteur Xi. Chaque cellule mémoire CM de la première colonne du plan mémoire de travail 10 est interconnectée à toutes les cellules de traitement CT, et au processeur élémentaire PE correspondant par l'intermédiaire d'un BUS.

Dans la première configuration telle que décrite en figure 3, le plan mémoire de travail 10 comprend alors n.p colonnes de cellules mémoire CM permettant la mémorisation de n.p vecteurs Xi constitutifs des vecteurs de données spatiales de rencontre successifs Rk.

Ainsi, dans la première configuration telle que décrite en figure 3, le plan mémoire de travail 20, et bien entendu le plan fantôme 21, contiennent n vecteurs Yi relatifs respectivement à un sous-ensemble Su, Su+1 de l'ensemble S, les vecteurs Yi étant de dimension p et rangés verticalement.

Le plan mémoire de l'ensemble R contient n.p vecteurs Xi de dimension p.

L'opération réalisée par le circuit tel que représenté en figure 3 est la rencontre de deux ensembles de n.p vecteurs.

L'unité active de calcul 3 constituée de n.p processeurs élémentaires reçoit successivement les p lignes du plan mémoire S. A un instant T1, la première ligne est chargée dans la première rangée des processeurs élémentaires, puis la deuxième ligne dans la deuxième rangée de processeurs élémentaires, et ainsi de suite jusqu'à la dernière. Lorsque la première rangée de processeurs élémentaires est chargée, celle-ci peut alors recevoir la première composante notée x11 du vecteur X1. De même lorsque la deuxième rangée de processeurs élémentaires est chargée, celle-ci peut recevoir la deuxième composante x21 du vecteur X1, pendant que la première rangée reçoit la première composante x12 du vecteur X2, et ainsi de suite.

La rencontre entre deux vecteurs Xi et Yi, ou d'ailleurs Yj, avec i différent de j, s'effectue par conséquent dans une colonne d'ordre y de processeurs élémentaires PE, ainsi que représenté en figure 3. A chaque cycle, cycle d'horloge, un processeur élémentaire délivre son résultat au processeur élémentaire qui lui succède dans la même colonne dans l'ordre des x croissants. Le p ième processeur élémentaire d'une colonne délivré ainsi un résultat par cycle.

Dans le cas où les plans de travail 10-20 et les plans fantômes correspondants 21-11 sont chargés en composantes de vecteurs correspondent à raison d'une composante {xki} respectivement {yki} à raison d'une composante par cycle d'horloge, pour recharger le plan fantôme S, c'est-à-dire le plan fantôme 21, au rythme d'une composante par cycle, n.p cycles sont nécessaires. A cette fin, le plan mémoire R, c'est-à-dire le plan de travail 10 et le plan fantôme 11, peuvent avantageusement être chargés et contenir n.p vecteurs Rk. En n.p cycles les n vecteurs Yi du premier sous-ensemble S1 rencontrent les n.p vecteurs de l'ensemble R. Parallèlement, le plan fantôme S, 21, reçoit les n vecteurs suivants constituant le sous-ensemble Su+1, ou S2.

Conformément à la désignation antérieure, un microcycle est constitué par n.p cycles. Au cours d'un microcycle, n vecteurs de l'ensemble S, plus particulièrement du sous-ensemble Su, rencontrent les n.p vecteurs de l'ensemble R et, parallèlement, un nouveau sous-ensemble Su+1 de S est chargé dans le plan fantôme 21 de la deuxième unité de mémorisation 2.

Au temps Tnp+1, la première rangée ou ligne des processeurs élémentaires PE du réseau bidimensionnel RE reçoit ainsi la première ligne du plan mémoire de travail 20 contenant le sous-ensemble Su+1 et entame ainsi le second microcycle.

Pour recharger le plan fantôme 11 contenant les vecteurs de données spatiales de rencontre Rk, $n.p^2$ cycles sont nécessaires. Ce temps correspond au traitement de p sous-ensembles de S, soit à un ensemble de n.p vecteurs. On définit ainsi un macrocycle comportant $n.p^2$ cycles au cours duquel on a ainsi effectué la rencontre de deux ensembles de n.p vecteurs et chargé parallèlement un nouvel ensemble R' de vecteurs Xi constitutifs de vecteurs de données spatiales de rencontre Rk.

On notera que la figure 3 représente la répartition des cycles, microcycles et macrocycles correspondants. Dans la première configuration du circuit objet de la présente invention telle que représentée en figure 3, on notera en fait que seul le plan fantôme 21 peut être prévu selon une implantation adjacente au réseau bidimensionnel RE de processeurs élémentaires PE, le plan mémoire de travail 20 étant alors distribué sous forme de registres, lesquels sont directement implantés dans le réseau bidimensionnel lui-même RE ou à son voisinage.

Une description plus détaillée de la deuxième configuration de type présentation parallèle-distribution parallèle sera maintenant donnée en liaison avec la figure 4.

Selon la configuration précitée, le réseau bidimensionnel RE comprend n.q processeurs élémentaires PE arrangés en q lignes et n colonnes. L'interconnexion des cellules de traitement CT et des processeurs élémentaires PE correspondants aux cellules mémoires des plans mémoire de travail 10 et 20 est réalisée de la même façon que dans le cas de la première configuration. Le plan mémoire de travail 10 dans lequel sont mémorisés les vecteurs données spatiales de rencontre Rk est alors organisé de façon à réaliser une mémorisation des composantes {xki} des vecteurs Xi correspondants dans des cellules mémoires CM selon un adressage en lignes et colonnes.

Dans la deuxième configuration telle que représentée en figure 4, chaque vecteur Xi est mémorisé sur une ligne, chaque ligne comportant n vecteurs Xi. Chaque vecteur de données spatiales de rencontre Rk est alors constitué à partir des composantes {xki} de même ordre k de q vecteurs mémorisés sur q lignes adjacentes.

Ainsi qu'on l'a représenté sur la figure 4, le plan mémoire de travail 10 comporte, mémorisé sur les q lignes adjacentes, les vecteurs Xi à Xi+q, puis à la suite de ces derniers les vecteurs Xi+q+1 à Xi+2q, et ainsi de suite.

Dans la deuxième configuration telle que décrite en liaison avec la figure 4, le plan mémoire de travail 20 relatif à l'ensemble S contient, ainsi que dans la première configuration décrite en liaison avec la figure 3, n vecteurs Yi de dimension p mémorisés par colonne.

Le plan mémoire de travail 10 et plan mémoire fantôme 11 relatif à l'ensemble R contient n.q vecteurs Xi de même dimension organisés en q lignes de n vecteurs.

L'opération réalisée par la partie active de calcul 3 est la rencontre de deux ensembles de n.q vecteurs. Les n.q processeurs élémentaires PE reçoivent à chaque cycle une ligne du plan mémoire S et une colonne du plan mémoire R, c'est-à-dire les vecteurs de données spatiales de rencontre Rk. De préférence, l'organisation des plans mémoires, ainsi que représenté en figure 4, est telle qu'à chaque cycle un processeur élémentaire PE reçoit deux composantes {xki} et {yki} de même rang. La rencontre de deux vecteurs Xi et Yi se fait par conséquent de façon locale dans un processeur élémentaire PE d'adresse x,y déterminée. Au bout de p cycles, le processeur élémentaire PE d'adresse x,y précitée peut alors délivrer un résultat par l'intermédiaire d'un BUS commun.

De la même façon que dans le cas de la première configuration, on peut définir un microcycle de n.p cycles pendant lequel les n vecteurs d'un sous-ensemble de S rencontrent les n.q vecteurs de l'ensemble R, le plan fantôme S, c'est-à-dire le plan fantôme 21, recevant un nouveau sous-ensemble Su+1 de l'ensemble S. Dans la deuxième configuration telle que représentée en figure 4, pendant un microcycle, le plan mémoire de travail 20 relatif à l'ensemble S doit être lu n fois.

Le macrocycle correspondant est alors égal à q microcycles, ainsi que représenté en figure 4, au cours desquels les q sous-ensembles Su à Su+q de l'ensemble S sont comparés à l'ensemble R, parallèlement au chargement et à la mémorisation d'un nouvel ensemble R' dans le plan fantôme 11 de la première unité de mémorisation 1.

Dans les deux configurations proposées telles que représentées en figures 3 et 4, le circuit objet de la présente invention effectue, au cours d'un macrocycle, la rencontre de deux ensembles R et S de taille ou de cardinalité identiques en nombre de vecteurs. Cependant, le circuit objet de la présente invention permet de réaliser la rencontre de deux ensembles de taille quelconque, par une succession de macrocycles.

Bien entendu, le fonctionnement du circuit objet de la présente invention n'est pas limité au mode de réalisation des configurations telles que représentées en figures 3 et 4.

En particulier, il est possible de généraliser et d'élargir le fonctionnement du circuit objet de la présente invention dans le cas où, en lieu et place du chargement et de la mémorisation d'une composante par cycle, cycle d'horloge, des unités de mémorisation, première unité de mémorisation 1 et deuxième unité de mémorisation 2, ainsi que de la transmission des vecteurs de données spatiales de rencontre Rk ou de vecteurs de données d'entrée sont effectués à raison de Nx composantes par cycle, respectivement Ny composantes par cycle.

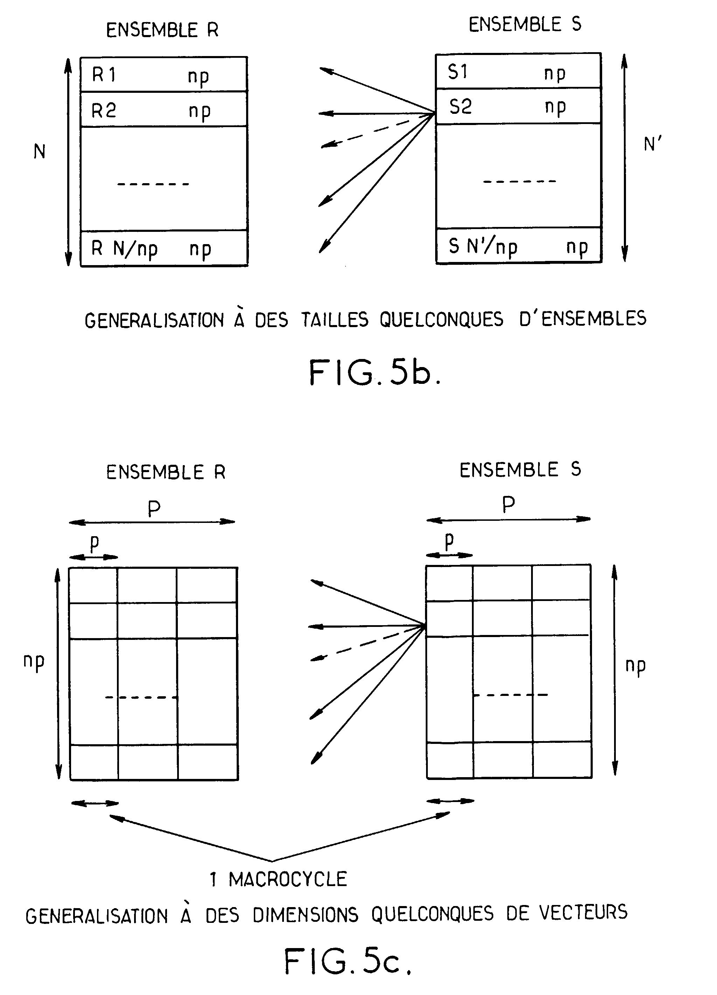

Une telle généralisation sera donnée maintenant en liaison avec les figures 5a à 5e, ce qui permet de donner une description plus adaptée du circuit objet de la présente invention.

Pour un nombre Ny de composantes par cycle qui alimentent le plan mémoire relatif à l'ensemble S, le plan fantôme 21 relatif à l'ensemble S peut être chargé pendant un microcycle de n.p/Ny cycles d'horloge.

En nombre de cycles d'horloge, un microcycle est défini par la relation :

$$\frac{n.p}{Ny}$$

La durée du microcycle ainsi défini fixe la profondeur selon y du plan mémoire R et la taille globale du plan mémoire R est égale à :

$$p. \frac{n.p}{Ny}$$

selon la première configuration et à

$$q. \frac{n.p}{Ny}$$

dans la deuxième configuration.

Pour un nombre d'entrées et de mémorisation Ny de composantes par cycle du plan mémoire relatif à l'ensemble R, le plan fantôme 11 relatif à l'ensemble R peut être chargé pendant un macrocycle égal à :

$$p. \frac{n.p}{Ny} \cdot \frac{1}{Nx}$$

dans la première configuration, et à

$$q. \frac{n.p}{Ny} \cdot \frac{1}{Nx}$$

dans la deuxième configuration.

Pour un nombre donné de processeurs élémentaires PE, soit n.p selon la première configuration telle que représentée en figure 3, et n.q selon la deuxième configuration telle que représentée en figure 4, l'augmentation de la bande passante permet de diminuer la taille des plans mémoires utilisés.

Ainsi on comprendra que, d'une manière générale, le circuit C selon l'invention présente avantageusement une taille Tr en nombre de cellules de mémorisation (CM) du plan fantôme (11) ou du plan mémoire de travail (11) relatif à l'ensemble R vérifiant la relation :

$$Tr = \frac{N.p}{Ny}$$

dans laquelle

N    désigne le nombre de processeurs élémentaires PE constituant le réseau bidimensionnel RE,

p    désigne la dimension des vecteurs,

Ny   désigne le débit de mémorisation dans lesdits plans mémoire en nombre de composantes des vecteurs par cycle d'horloge.

On comprendra bien sûr que le circuit objet de la présente invention tel que représenté en figures 3 et 4 peut être utilisé pour assurer la rencontre d'ensembles de vecteurs ou tuples de taille quelconque, un seul circuit étant utilisé.

En effet, un circuit tel que représenté précédemment est capable, en un macrocycle, d'effectuer la rencontre de n.q vecteurs R et n.q vecteurs de S. Pour des ensembles R et S de cardinalité N et N', c'est-à-dire comportant N et N' vecteurs, il est alors possible de former dans chacun des ensembles précités des sous-ensembles de n.q vecteurs. Les nombres de sous-ensembles dans les ensembles R et S sont respectivement de N/n.q et N'/n.q. La rencontre de tous les vecteurs des ensembles R et S est effectuée lorsque chaque sous-ensemble de S rencontre tous les sous-ensembles de l'ensemble R et, par conséquent, le nombre de macrocycles nécessaires pour effectuer la rencontre est de :

$$\frac{N.N'}{(n.q)^2}$$

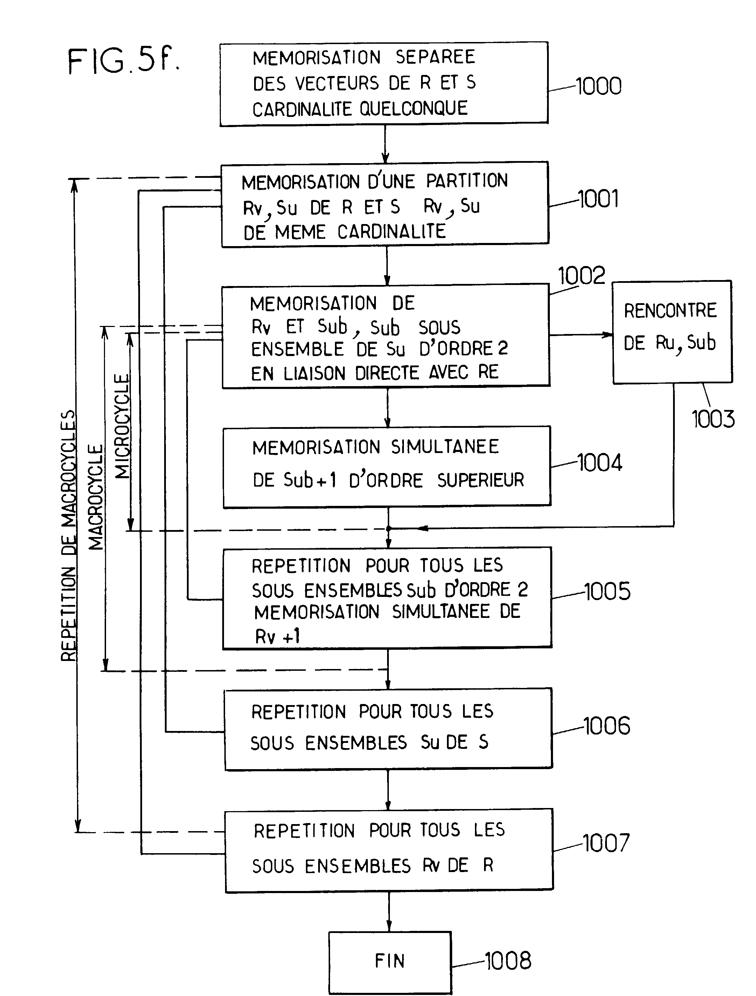

Un mode de mise en oeuvre non limitatif de type séquentiel du procédé objet de l'invention permettant d'effectuer la rencontre de deux ensembles R,S de cardinalité quelconque est représenté en figure 5f.

Dans cette figure :

1000    indique une étape de mémorisation séparée des vecteurs de R et S ensembles de cardinalité quelconque,

1001    indique une étape de mémorisation d'une partition Rv, Su de R et S Rv et Su étant des sous-ensembles de même cardinalité,

1002    indique une étape de mémorisation de Rv et Sub, Sub sous-ensemble de Su et sous-ensemble d'ordre 2 de S en liaison directe avec le réseau bidimensionnel RE dans les plans de mémoire de travail 10, respectivement 20,

1003    indique une étape de rencontre spatiale et temporelle des sous-ensembles Rv et Sub pendant un microcycle,

1004    indique une étape de mémorisation simultanée pendant le microcycle du sous-ensemble Sub+1 de rang supérieur dans le plan fantôme 21,

1005    indique une étape de répétition de 1002, 1003, 1004 pour tous les sous-ensembles d'ordre 2 Sub de S, pendant la durée d'un macrocycle et mémorisation simultanée de Rv+1 dans le plan fantôme 11,

1006    indique une étape de répétition pour tous les sous-ensembles Su de S,

1007    indique une étape de répétition pour tous les sous-ensembles Rv de R,

1008    indique une étape de fin.

De même, le circuit tel que représenté en figures 3 et 4, objet de la présente invention, peut être utilisé pour assurer la rencontre de vecteurs de dimension quelconque appelés ci-après macro-vecteurs.

Un circuit effectue la rencontre de deux ensembles de vecteurs de dimension p. Pour une dimension P des vecteurs des ensembles R et S, avec P > p, on divise alors chaque vecteur en P/p sous vecteur de dimension p, les sous-vecteurs de dimension < P pouvant être complétés par des composantes de valeur arbitraire, nulle par exemple. Au cours d'un macrocycle, le circuit objet de la présente invention tel que représenté en figure 3 ou 4 effectue la rencontre de n.p respectivement n.q sous-vecteurs de R et de S. Par conséquent, P/p macrocycles sont nécessaires au traitement de l'ensemble de ces vecteurs. Les résultats partiels obtenus sur les sous-vecteurs doivent alors être réinjectés dans les processeurs élémentaires PE au début de chaque macrocycle. La mémorisation des résultas partiels, c'est-à-dire les résultats relatifs à chaque macrocycle, peut alors se faire à l'intérieur du circuit lui-même dans une mémoire de stockage notée 5, interne au circuit C, cette mémoire de stockage 5 étant représentée en traits continus sur les figures 3 et 4.

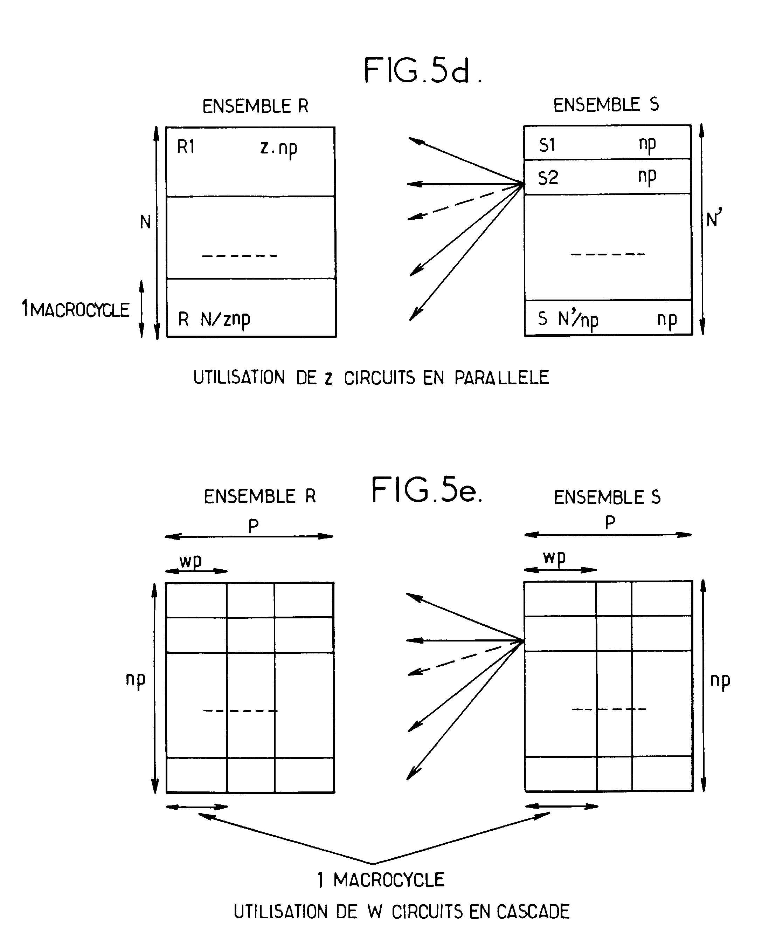

On notera enfin que l'utilisation de plusieurs circuits en parallèle ou en cascade permet d'augmenter la vitesse de traitement, ainsi qu'il sera décrit de manière schématique en liaison avec les figures 5d et 5e.

Ainsi que représenté en figure 5d, l'utilisation de plusieurs circuits en parallèle permet d'augmenter la vitesse de traitement ou, autrement dit, à vitesse égale, de traiter des ensembles de taille ou cardinalité plus importante.

L'utilisation en parallèle de z circuits permet de traiter en un macrocycle la rencontre d'un ensemble de n.q vecteurs de l'ensemble S et d'un ensemble de z.n.q vecteurs de l'ensemble R. Pour des ensembles R et S de cardinalité ou de taille N, respectivement N', la rencontre de R et S se traduit par la rencontre de chaque sous-ensemble de n.q vecteurs de S avec tous les sous-ensembles de z.n.q vecteurs de R. Le nombre de macrocycles nécessaires pour assurer la rencontre est par conséquent égale à :

$$\frac{N.N'}{z.(n.q)^2}$$

On notera en outre que dans le cas de l'utilisation de z circuits en parallèle, le temps de traitement pour effectuer la rencontre des ensembles R et S est z fois plus faible que le temps mis par un seul circuit pour effectuer la même opération.

Ainsi qu'on l'a représenté en figure 5e lors de l'utilisation de plusieurs opérateurs en cascade, la mise en cascade de plusieurs opérateurs permet d'augmenter la dimension des vecteurs ainsi traités. Pour des vecteurs des ensembles R et S de dimension P, w opérateurs mis en cascade permettent de traiter en un macrocycle la rencontre de n.q sous-vecteurs de l'ensemble R et n.q sous-vecteurs de l'ensemble S de dimension w.p. Le traitement de l'ensemble des vecteurs nécessite un nombre de macrocycles égal à :

$$\frac{P}{w.p}$$

L'utilisation de w opérateurs en cascade permet de diviser par w le temps de traitement que prendrait un seul opérateur pour effectuer la même opération.

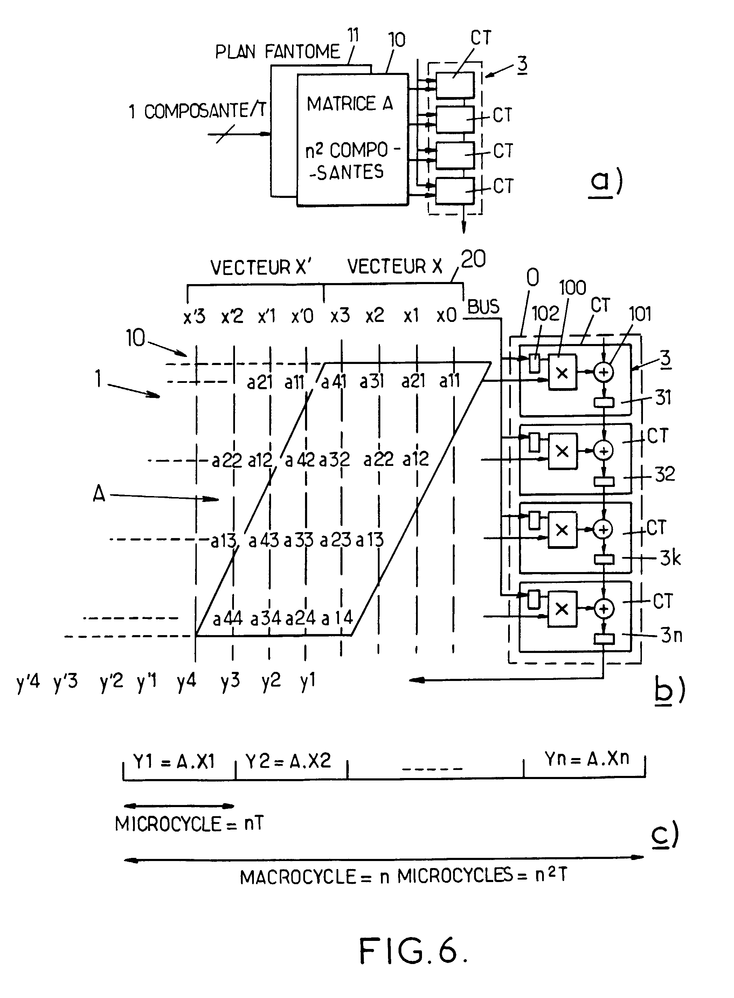

Une description plus détaillée d'un mode de réalisation avantageux d'un circuit objet de la présente invention, plus spécialement mis en oeuvre en vue de réaliser un traitement de type produit-matrice-vecteur, en particulier d'une matrice A de dimension $N^2$ et vecteur X de dimension N sera décrit en liaison avec la figure 6.

Dans le mode de réalisation précité, ainsi qu'on l'a représenté sur la figure 6, l'unité active de calcul 3 peut être constituée en un réseau de cellules de traitement comportant une seule colonne comprenant n cellules de traitement constituant un opérateur noté O. Ainsi, le réseau bidimensionnel dans le mode de réalisation tel que représenté en figure 6 aux points a) et b) est réduit à un réseau monodimensionnel, l'une des dimensions du réseau bidimensionnel présentant une mesure nulle.

Ainsi qu'on le remarquera à l'observation du point b) de la figure 6, chaque cellule de traitement CT comporte un multiplieur 100 et un additionneur 101. Les composantes xj des vecteurs X sont introduites séquentiellement à partir du plan mémoire de travail 20 et les coefficients aij, avec i,j appartenant à [1,n], de la matrice A sont chargés dans le plan fantôme 11 ou le plan de travail 10 de l'unité de mémorisation 1.

Les composantes X1, X2, Xj, Xn des vecteurs X sont introduites dans l'opérateur O par l'intermédiaire d'un bus commun noté BUS lequel dessert successivement les cellules de traitement CT. Les composantes précitées sont de préférence mémorisées dans des registres jouant le rôle de plan mémoire de travail 20 ainsi que décrit précédemment.

La matrice A est mémorisée dans le plan mémoire de travail 10 de l'unité de mémorisation 1, chaque cellule de traitement CT pouvant recevoir simultanément une composante a1j du premier vecteur ligne de la matrice A. Ainsi, au temps T1 la cellule 31 reçoit les composantes x1 et a11, au temps T2 la cellule 32 reçoit les composantes x2 et a12 et ainsi de suite. Au temps Tk la cellule 3k reçoit les composantes xk et a1k. Celle-ci effectue le produit a1k.xk et l'additionne à la somme partielle Sk-1 délivrée par la cellule de traitement CT 3k-1. A l'instant T k+1, la cellule de traitement CT d'ordre k délivre la somme partielle Sk laquelle s'exprime par :

$$Sk = \sum_{j=1}^{k} aij.xj$$

Au temps Tn+1, l'opérateur O délivre la première composante y1 du vecteur résultat Y.

En outre, au temps T2, la cellule 31 peut recevoir la première composante du deuxième vecteur ligne a21, au temps T3 la cellule 32 reçoit la composante a22 et ainsi de suite. Au temps T n+2, l'opérateur O délivre la deuxième composante y2 du vecteur résultat Y. Le processus se répète ainsi sur tous les vecteurs lignes de la matrice A telle que représentée en figure 6 et l'opérateur O délivre séquentiellement les n composantes du vecteur résultat Y.

Lorsque les n composantes du vecteur X ont été chargées dans l'opérateur O, en particulier dans les registres 102 des cellules de traitement CT correspondant, ce dernier est prêt à accepter les composantes d'un nouveau vecteur X' et par conséquent tous les n cycles d'horloge un nouveau vecteur X peut être traité.

Ainsi qu'on l'a représenté au point c) de la figure 6, le microcycle est ici défini comme étant la période qui correspond au calcul du produit entre la matrice A et un vecteur X, ce microcycle étant égal à n cycles d'horloge. A la fin d'un microcycle, le contexte permettant le traitement d'un nouveau vecteur est ainsi prêt.

De la même façon, le macrocycle est alors défini comme étant la période nécessaire au chargement dans le plan mémoire fantôme 11 d'une nouvelle matrice A' à raison d'un coefficient par cycle d'horloge le temps de chargement étant proportionnel à $n^2$. Parallèlement à ce chargement, n microcycles peuvent ainsi être effectués.

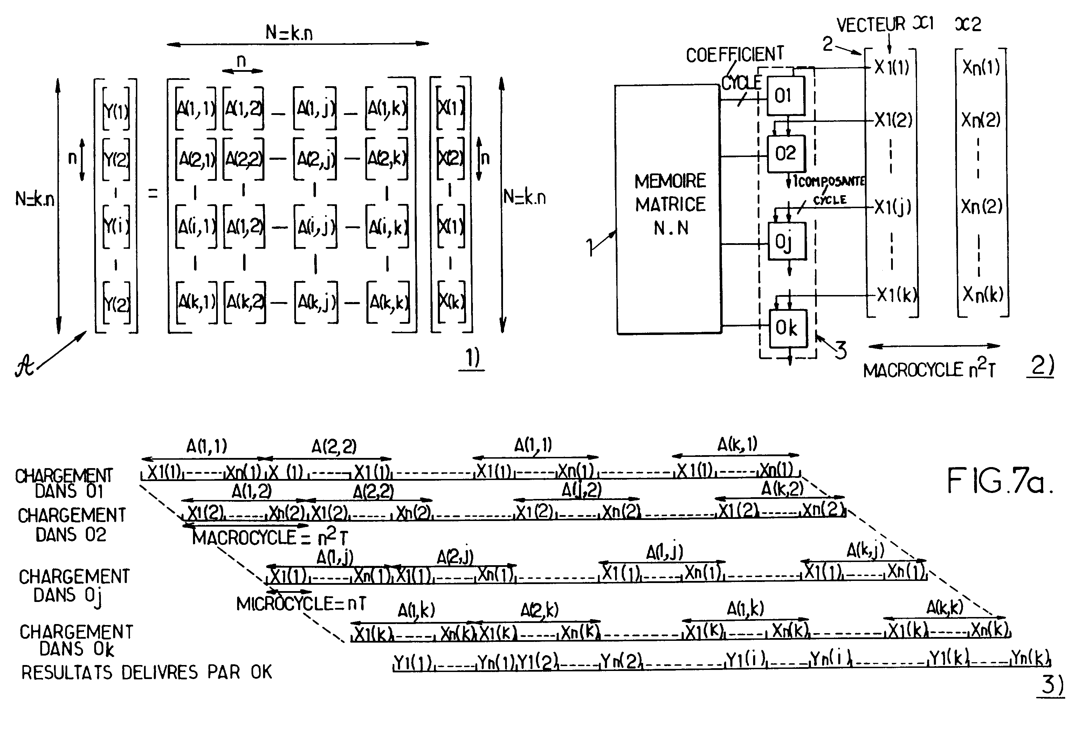

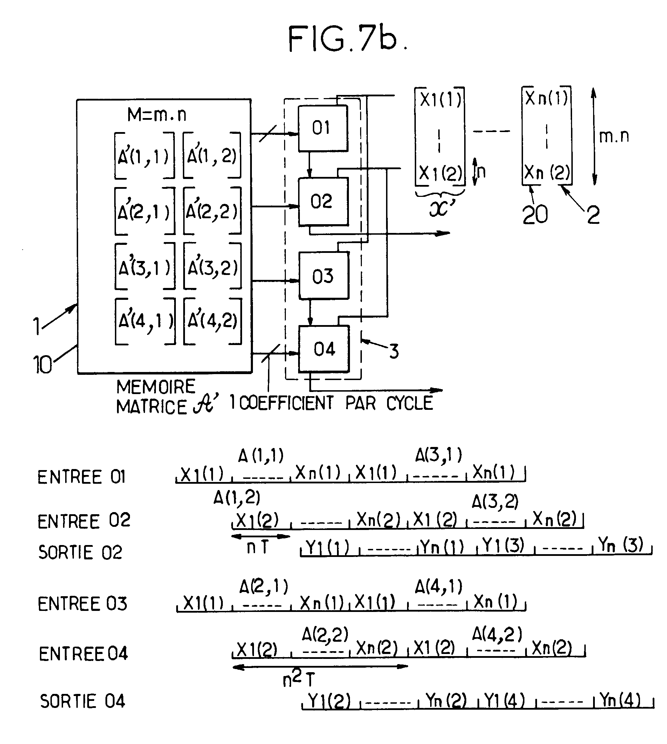

Deux variantes de réalisation plus spécifiques relatives respectivement à des opérations de type produits de matrice carrée A de dimension $N^2$, de grande dimension, et vecteur X de dimension N puis matrice rectangulaire A' de dimension N.M vecteurs X' dimension M seront décrits en liaison avec les figures 7a et 7b.

Selon la figure 7a au point 1) de celle-ci, A est une matrice carrée de dimension $N^2$ et Y et X désignent des vecteurs de dimension N, N étant très grand devant n.

Le calcul du produit Y = A.X est fondé sur le processus décrit relativement à la figure 6 précédemment. On considère que N est un multiple de n avec N=K.n.

Dans un tel cas, l'unité active de calcul 3 comporte K opérateurs en cascade travaillant en parallèle. Les opérateurs sur la figure précitée au point 2) de celle-ci sont notés respectivement O1 à OK.

Le vecteur X est décomposé en ses composantes en K parties égales ou sous vecteurs de dimension n, ces sous vecteurs étant notés X(1), X(2)...X(j), X(K).

De la même façon, la matrice A est alors décomposée en $K^2$ sous matrice de taille $n^2$, notée chacune A(i,j) avec i,j appartenant [1,k].

Le vecteur résultat Y du produit est obtenu sous la forme :

$$\mathcal{Y} \, = \, \begin{bmatrix} [Y(1)] \\ [Y(i)] \\ [Y(K)] \end{bmatrix} \quad \text{avec} \quad Y(i) = \sum_{j=1}^{K} A(i,j).X(j)$$

Dans la relation précitée, le terme A(i,j).X(j) désigne le produit de la sous matrice A(i,j) de dimension $n^2$ et du vecteur X(j) de dimension n. On notera que Y(i) désigne la $i^{ème}$ partie ou sous vecteur de dimension n du vecteur résultat Y.

L'organisation des calculs repose sur une succession de macrocycles de $n^2$ cycles.

Pendant chaque macrocycle, une rangée de K matrices A(i,j) j=1,..,K est traitée, et en parallèle, la rangée suivante des K matrices A(i+1,j) est chargée dans les plans mémoires libres des K opérateurs. K macrocycles sont donc nécessaires pour le traitement des K rangées de matrices de la matrice A.

Un macrocycle, d'autre part se décompose en n microcycles. Un microcycle correspond au produit d'un vecteur X avec les n vecteurs lignes de A que forment les K matrices A(i,j) pour j=1, ...,K. Le résultat de ce produit est le vecteur Y(i), ième partie de Y. Les n microcycles successifs d'un macrocycle correspondent par conséquent au traitement successif de n vecteurs , X, notés X1, X2 ..., Xn. Les résultats successifs délivrés sont les vecteurs Y1(i), Y2(i),.., Yn (i), ième parties des vecteurs résultat Y1, Y2, ...,Yn.

Le déroulement des calculs est illustré par le chronogramme de la figure 7a point 3.

Initialement, on considère les matrices A(1,1), A(1,2),.., A(1,j ) .., A(1,K) respectivement chargées dans les plans mémoire des opérateurs 01, 02, ..., Oj, ..., OK.

Les coordonnées du vecteur X1 sont chargées séquentiellement dans les opérateurs de la façon suivante :

| | |
|---|---|
| de T1 à Tn | O1 reçoit les n composantes du vecteur X1(1), |
| de Tn+1 à T2n | O2 reçoit les n composantes du vecteur X1(2) |
| de T(k-1)n+1 à TN | OK reçoit les n composantes du vecteur X1(K). |

De TN+1 à TN+2, le dernier opérateur délivre les n composantes du vecteur Y1(1).

Parallèlement au chargement du vecteur X1(2) dans l'opérateur O2, O1 peut recevoir les n composantes du vecteur X2(1). Le chargement du vecteur X2 se fait par conséquent de la même façon que pour X1, mais avec un décalage de n cycles. Il en est de même pour les vecteurs X3, .., Xn. Les résultats délivrés par le dernier opérateur de la chaîne sont par conséquent successivement les vecteurs Y1(1), ..., Yn(1).

Dans chaque opérateur la matrice chargée dans le premier plan mémoire est utilisée pendant un macrocycle de $n^2$ cycles. Pendant le traitement des matrices A(1,j), j=1, ..., K, les matrices A(2,j), j=1,...,K sont chargées dans les opérateurs. Lorsque le chargement est terminé, ce qui correspond à la fin du premier macrocycle, le deuxième macrocycle démarre, et les vecteurs X1, X2 ..., Xn sont à nouveau introduits séquentiellement dans les opérateurs.

Les résultats délivrés au cours du second macrocycle sont les vecteurs Y1(2), Y2(2), Y3(2),..., Yn(2).

Les résultats délivrés au cours du dernier macrocycle sont les vecteurs Y1(k), Y2(k) ..., Yn(k).

K macrocycles sont nécessaires au traitement global de la matrice pendant lesquels sont effectués les produits A.X1,A.X2 A.Xn.

Dans le mode de réalisation tel que représenté en figure 7b, celui-ci est mis en oeuvre en vue de réaliser un traitement de type produit matrice vecteur, matrice A' de dimension N.M et vecteur X' de dimension M.

Dans ce cas, l'unité active de traitement 3 comporte K opérateur en cascade travaillant en parallèle, le vecteur X' étant divisé en m parties ou sous vecteurs de dimension n, notées X'(1), X' (2)... X'(n) la matrice A' étant décomposée en K.m matrice de dimension $n^2$ notées A(i,j) avec i appartenant [1,K] et j appartenant [1,m].

Ainsi pour assurer le traitement dans le mode de réalisation de la figure 7b, on forme K/m groupes de m opérateurs chacun, les groupes d'opérateurs O1 à OK travaillant en parallèle de façon indépendante.

Pendant le premier macrocycle, le premier groupe traite les matrices élémentaires A(1,1), A(1,2)..., A(1,m). Le deuxième groupe traite les matrices A(2,1) A(2,2)... A(2,m). Le dernier groupe des K opérateurs permet de traiter les matrices A(K/m,1) A(K/m,2)... A(K/m,m).

Pendant ce macrocycle, n vecteurs X' sont traités et les résultats délivrés par le premier groupe sont successivement Y1(1),... Yn(1), les résultats délivrés par le deuxième groupe sont les vecteurs Y1(2),... Yn(2) et le dernier groupe délivre les vecteurs Y1(K/m),... Yn(K/m). Pendant le premier macrocycle, K nouvelles matrices peuvent être chargées dans les opérateurs, ces nouvelles matrices étant traitées au cours du deuxième macrocycle.

Ce calcul nécessite ainsi une succession de m macrocycles au cours desquels n vecteurs X' sont traités avec l'ensemble de la matrice A'.

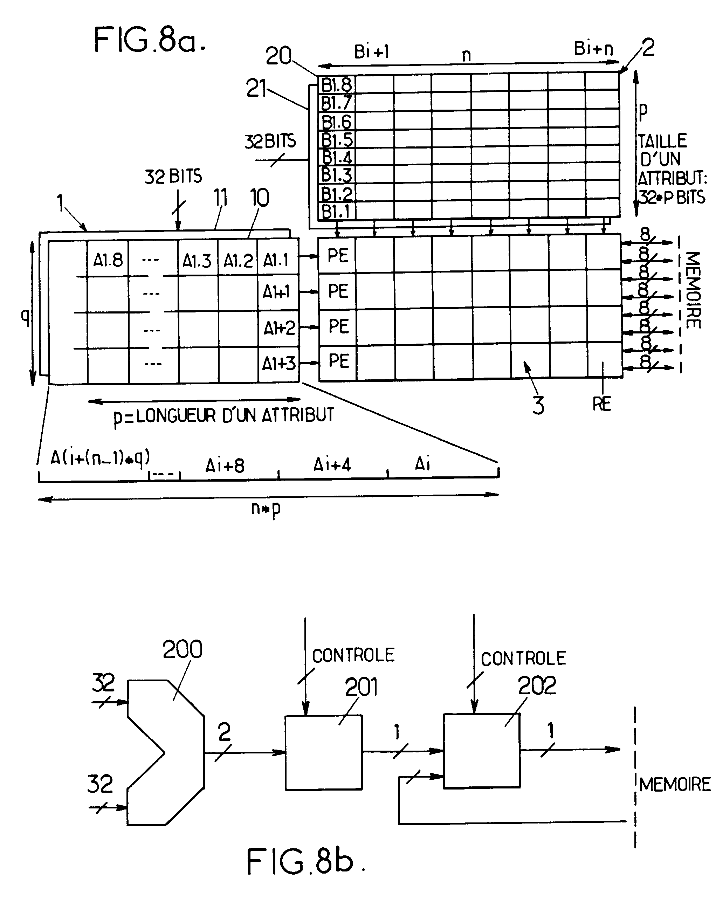

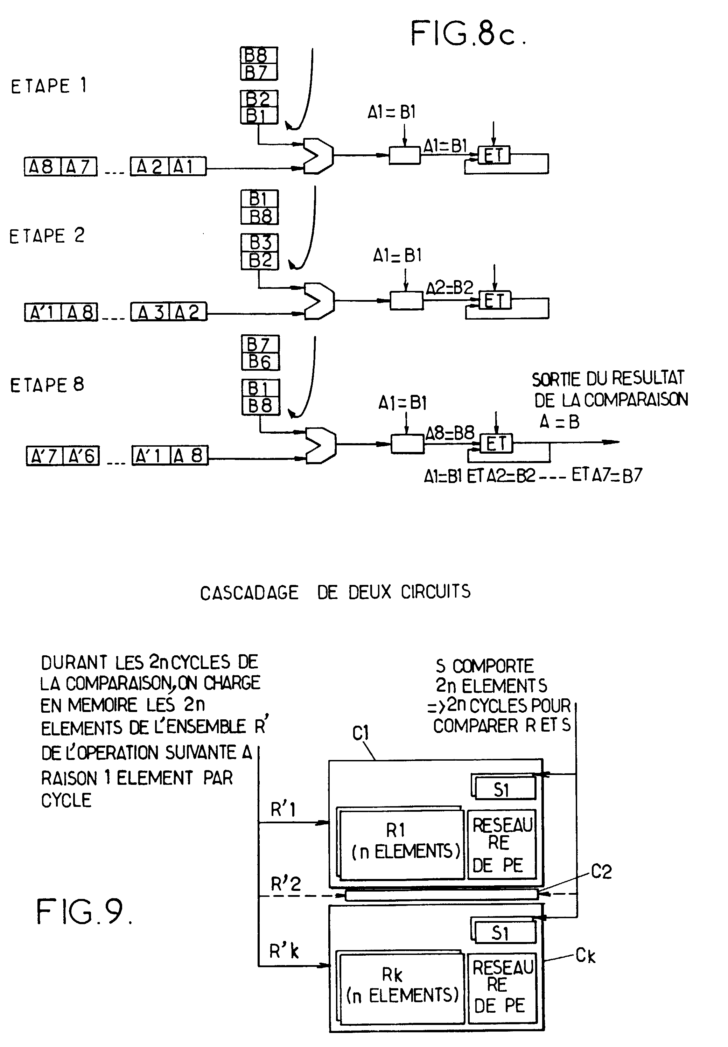

Une description détaillée d'un mode de réalisation particulièrement avantageux d'un circuit conforme l'objet de la présente invention plus particulièrement destiné à la mise en oeuvre d'un processus de comparaison de deux relations d'une base de données sera donnée en liaison avec les figures 8a, 8b, 8c.

Pour mémoire, on rappellera tout d'abord qu'une base de données n'est autre qu'un ensemble de relations, par exemple : élève, professeur, cours, qu'une relation est constituée d'un ensemble de tuples, par exemple les différents élèves et qu'enfin un tuple est composé de différents attributs. Par exemple pour un tuple élève, son nom, son prénom, son âge, son adresse, son option etc.

La plupart des questions, formulées par des tests, sur une base de données peuvent être décomposées en une suite d'opérations élémentaires portant sur une ou deux relations c'est-à-dire sur un ou deux ensembles de tuples. De manière classique, ces opérations sont :

- la sélection, c'est-à-dire le choix sur un critère,
- la jointure, c'est-à-dire la détection d'un attribut ou d'une fonction d'attributs sur plusieurs tuples,
- les opérations ensemblistes telles que l'union, l'intersection et la différence d'ensembles,
- la projection, c'est-à-dire la projection sur quelques attributs ou suppression des doublets,
- et enfin le tri.

Toutes ces opérations, sauf la sélection, s'effectuent par la comparaison de tous les éléments d'un ensemble avec tous les autres éléments de l'autre ensemble. De manière plus générale on parlera de la comparaison de deux ensembles. Suivant la question posée l'analyse des résultats des comparaisons diffère.

La taille des relations dans une base de données peut varier de quelques dizaines à plusieurs millions de tuples. L'opération de comparaison entre deux ensembles est donc une opération extrêmement coûteuse, notamment en temps, et on notera que pour comparer deux ensembles de mille éléments par une méthode directe il est nécessaire d'effectuer un million de comparaisons.

Actuellement il existe trois types d'algorithmes permettant d'effectuer la comparaison de deux ensembles : directement, par tri et par hachage.

L'essentiel de la méthode de hachage est d'appliquer une même fonction aléatoire à la valeur des attributs de chaque tuple, de façon à réaliser une partition des tuples en différents sous-ensembles disjoints, ces sous-ensembles étant indexés par les valeurs de la fonction de hachage. Ainsi, entre deux paquets d'indices différents il n'existe pas de tuples joignants. Après la phase de hachage il ne reste plus qu'à joindre les paquets de même indice.

Cette dernière méthode permet à la fois de réduire le nombre de comparaisons et de diviser une opération en plusieurs opérations indépendantes plus petites.

On notera que le circuit objet de la présente invention présente une architecture s'adaptant particulièrement bien à la méthode de hachage. En effet, cette méthode permet de transformer la comparaison de deux ensembles de grande cardinalité en une suite de comparaisons d'ensembles de petite cardinalité, typiquement entre trente à cent éléments. Une comparaison élémentaire peut ainsi être réalisée directement par un processeur élémentaire PE par exemple tandis que le contexte de l'opération suivante est chargé.

Dans le mode de réalisation tel que représenté en figure 8a et 8b, on notera que ce mode de réalisation correspond à une architecture selon la deuxième configuration telle que représentée en figure 4, appelée configuration de type présentation parallèle-distribution parallèle. Ce mode de réalisation ne préjuge pas de la configuration choisie, toute autre configuration de type introduction séquentielle-distribution parallèle pouvant bien entendu être envisagée, sans sortir du cadre de l'objet de la présente invention.

Ainsi qu'on le constatera à l'observation de la figure 8b, chaque processeur élémentaire PE du réseau bidimensionnel RE comporte un comparateur numérique 200 permettant de répondre aux questions ou tests "R.A"="S.A", où "R.A"<"S.A" où "R.A" et "S.A" sont soit des attributs, soit des parties d'attributs. Une unité de contrôle programmable 201 permet de répondre à l'un des tests suivants "R.A"<"S.A", "R.A"=<"S.A", "R.A"="S.A", "R.A">="S.A" ou "R.A">"S.A". L'unité de contrôle prommable 201 délivre un bit résultat de valeur 1 sur réponse positive au test considéré et un bit résultat de valeur 0 dans le cas contraire. Enfin, une unité programmable 202 permet de recombiner le bit résultat délivré par l'unité de contrôle programmable 201, pour le test considéré, avec un bit résultat intermédiaire antérieur. Enfin, une mémoire 203 est prévue pour mémoriser soit les résultats intermédiaires délivrés par chaque processeur élémentaire PE, soit les résultats définis ainsi qu'il a déjà été mentionné dans la description, cette mémoire 203 pouvant être par exemple implantée de façon analogue à la mémoire 5 dans le circuit objet de la présente invention tel que représenté en figure 3 et 4.

On notera que tous les processeurs élémentaires PE d'une unité active de calcul 3 constituant le réseau bidimensionnel RE de la figure 8a obéissent au même contrôle et sont donc implantés en configuration de type SIMD, c'est-à-dire à commande unique de processeur, ce qui rend extrêmement simple la partie contrôle de l'unité active de calcul 3 et de chaque processeur élémentaire PE.

De tels processeurs élémentaires PE, de par leur simplicité relative, comportent très peu de transistors, de mille à deux mille suivant la fréquence de fonctionnement désirée, ce qui permet d'implanter plusieurs dizaines de ces processeurs élémentaires par unité active de calcul 3 et donc par circuit.

La comparaison de deux ensembles d'attributs sera maintenant décrite en liaison avec les figures 8a, 8b et 8c.

De façon générale, quelle que soit l'opération réalisée sur deux relations, la rencontre d'un tuple de R et d'un tuple de S peut s'exprimer de la façon suivante :

(R.A1 OP1 S.A1)ET/OU (R.A2 OP2 S.A2)ET/OU...(R.A OPk S.Ak),

où

$R.A_i$ est le ième attribut d'un tuple de R,

$S.A_j$ est le jème attribut d'un tuple de S,

k est le nombre d'attributs que l'opération met en jeu,

$OP_j$ est un opérateur du type F, <, >, J, =, ≠.

L'opération effectuée entre deux attributs est arithmétique, mais son résultat est booléen. En d'autres termes, elle consiste à répondre à une question du type: L'attribut i du tuple R est-il supérieur à l'attribut j du tuple S?. Si c'est le cas, la réponse est 1, si non elle vaut 0.

Le résultat d'une rencontre de deux tuples est la valeur booléenne d'une fonction booléenne appliquée sur l'ensemble des résultats obtenus sur les paires d'attributs. Une opération sur deux relations consiste à appliquer cette opération sur toutes les paires de tuples possibles formées d'un tuple de R et d'un tuple de S. En d'autres termes, tout tuple de S doit rencontrer tous les tuples de R.

Dans une relation de bases de données, les tuples sont formés d'un nombre donné d'attributs. Cependant, une opération effectué sur deux relations ne met pas forcément en jeu tous les attributs des tuples. Par exemple, considérons une opération de jointure effectuée sur deux relations R et S et qui consiste à chercher tous les couples de tuples de R et S qui vérifient l'expression booléenne :

[R.1<S.A3 et R.A3=S A4] = vrai

Dans l'exemple donné ici,seuls les attributs 1 et 3 des tuples de R et les attributs 3 et 4 des tuples de S sont utilisés à l'opération. Les autres ne sont pas considérés.

Il faut en outre préciser que la taille d'un attribut (en nombre de bits) peut être très élevée. Nous considèrerons par la suite que le processeur élémentaire PE est capable d'effectuer la rencontre de deux mots de 32 bits par exemple. Lorsque la longueur de l'attribut dépasse 32 bits, ce qui est en général le cas, on peut diviser celle-ci en plusieurs mots de 32 bits, et traiter séparément les mots.

Ce découpage ne pose pas de problème. En effet, pour des attributs constitués de p mots de 32 bits, une question du type $R.A_i = S.B_i$ peut être décomposée en une fonction booléenne des résultats obtenus sur chacun des mots de 32 bits: $R.A_{i1} = S.B_{i1}$ et $R.A_{i2} = SB_{i2}$ et ....... et $R.A_{ip} = S.B_{ip}$

où $A_{ij}$ désigne le jième mot de l'attribut i. Pour l'opérateur, les différents mots d'un même attribut peuvent être vus au même titre que les attributs, comme des composantes de vecteur. Ainsi, un tuple de q attributs peut être considéré comme un vecteur de pq composantes, si les attributs ont des longueurs de p mots de 32 bits.

Nous considérons une opération mettant en jeu un seul attribut par tuple. La question ou test posé pour chaque paire de tuple formée est du type $R.A_i = S.B_j$

A titre d'exemple non limitatif, on considère :

Une taille d'attribut égale à 32.p bits,

Une taille de sous ensembles de n.q attributs, soit nq tuples (1 attribut/tuple),
un microcycle de np cycles d'horloge
un macrocycle de npq cycles d'horloge, soit q microcycles.

On considère la profondeur du plan mémoire l'unité de mémorisation 2 relative à l'ensemble S égale à p.mots de 32 bits, permettant ainsi de ranger dans chaque colonne un attribut.

Un microcycle se divise en n phases de p cycles d'horloge. Dans une phase de p cycles, on effectue la rencontre de n tuples de S et de q tuples de R. Les attributs A et B sont décomposés en p mots de 32 bits A1, A2, ..., Ap et B1, B2, ..., Bp. La question A = B devient alors "A1=B1" et "A2=B2" et ... et "Ap=Bp". Il suffit donc durant ces p cycles de réaliser un "ET" logique entre tous ces résultats partiels pour obtenir la réponse à "A=B". Ces "ET" sont effectués de façon naturelle par récurrence en programmant une unité de recombinaison ainsi qu'il est indiqué dans la figure 8c. Une fois la phase de p cycles écoulée, les résultats sont évacués à l'extérieur pour être traités par le système de gestion de la base de données.

La recontre des deux sous-ensembles de nq tuples dure ici un macrocycle.

Un des grands avantages de l'architecture du circuit objet de la présente invention tel que représenté en figures 8a et 8b, est que l'on peut traiter:

- des tuples de dimension quelconque. Si une opération met en jeu k attributs d'un tuple, k macrocycles seront nécessaires.
- des attributs de longueur quelconque. En effet, si les attributs sont plus longs que 32.p bits, alors il suffit de partager chaque attribut en m paquets de 32.p bits. La comparaison de deux ensembles d'attributs durera alors m macrocycles.

Dans les deux cas, il faut réinjecter les résultats partiels obtenus à chaque macrocycle en programmant l'unité de recombinaison de façon pertinente.

Ce point est extrêmement important puisqu'il donne au circuit une souplesse indispensable dans un contexte de bases de données.

L'architecture proposée telle que représentée en figures 8a, 8b notamment permet de réaliser la comparaison de deux ensembles n éléments avec une taille de mémoire intégrée au circuit objet de la présente invention égale à deux $n+2 \sqrt{n}$.

Dans une solution classique de mémoire intégrée, la taille de la mémoire est seulement de 2n. On constate donc la nécessité d'un surcoût de mémorisation dans le circuit objet de la présente invention mais ce surcoût permet de rendre parallèle l'exécution d'une comparaison et le chargement des éléments de la comparaison suivante. Il y a donc en définitive un gain de deux en vitesse de traitement à technologie égale par rapport à la solution classique. En effet, dans une solution classique, l'opération de comparaison de deux ensembles se déroule en deux étapes : chargement des deux ensembles à comparer puis ensuite comparaison proprement dite.

Une application du circuit objet de la présente invention à un système de traitement de signaux numériques représentatifs de vecteurs ou tuples d'une base de données sera écrite en liaison avec la figure 9.

Un tel système résulte d'un caractère avantageux du circuit objet de la présente invention selon lequel il est possible de connecter en cascade, sans inconvénient, plusieurs circuits lorsque l'on envisage de traiter des ensembles de vecteurs, ou de tuples, de taille plus importante. Dans un tel cas, le nombre de lectures en mémoire reste toujours minimum. En supposant qu'un circuit conforme à l'objet de la présente invention soit en mesure de traiter des ensembles de taille n, pour traiter un ensemble de taille 2n par exemple, il suffit en fait d'associer deux circuits en cascade. D'une manière plus générale, le système comporte alors une pluralité de circuits notée C1 à Ck connectés en parallèle, ces circuits fonctionnant cependant en cascade ainsi qu'il sera expliqué ci-après. Chaque circuit reçoit respectivement au niveau de ces plans mémoire de travail 10 et plans fantôme 11 une partition R'1, R'2, R'k de l'ensemble R des vecteurs de données de rencontre spatiale, alors que les plans mémoire de travail et plans mémoire fantôme 20,21 recoivent en parallèle les vecteurs de données d'entrée S, ce qui permet d'augmenter la cardinalité des ensembles de tuples de données de rencontre spatiale traités sans modification de débit pour en même temps de traitement. On notera bien sûr que la cardinalité des ensembles de tuples de données de rencontre spatiale est égale à la somme des cardinalités de chacune des partitions R'1 à R'k.

Un tel mode opératoire peut être généralisé à des tailles d'ensembles quelconques pourvu que l'on mette en cascade, ainsi que représenté en figure 9 un nombre de circuits correspondants nécessaires.

Il est à noter que dans une solution classique de mémoire intégrée les performances chuteraient de façon inacceptable car il serait nécessaire de relire plusieurs fois les éléments d'un des ensembles dans la mémoire principale.

On a ainsi décrit un procédé et un circuit de traitement de données numériques représentatives de vecteurs ou tuples particulièrement performants dans la mesure où l'agencement particulier de ce type de circuit grâce à la mise en oeuvre du procédé de traitement objet de la présente invention, permet d'envisager l'implantation de circuits en technologie CMOS 1.2 μm pouvant traiter des tailles de paquets de 32 tuples avec des tailles d'attributs de 4.32 bits ou des paquets de 64 tuples avec des tailles d'attributs de 2.32 bits avec un temps de cycle d'horloge de 80 ns.

A titre de comparaison on donnera les performances du circuit objet de la présente invention comparées à celles de différents processeurs déjà existants.

Si l'on suppose une jointure sur deux ensembles de 1000 éléments de 4 octets un processeur de type Vax 750/11 présentant une vitesse de traitement de 8 Mips effectue une telle jointure en 1,1 secondes. Pour un processeur de puissance de traitement de 20 Mips un temps d'exécution d'une opération comparable de 0,44 secondes est nécessaire. On notera qu'un co-processeur de type RAPID est susceptible d'exécuter une telle opération pour un temps de cycle de 120 ns ramené ainsi à 3,44 ms pour un temps de cycle équivalent de 80 ns.

Contrairement au résultat précédemment annoncé, le circuit objet de la présente invention dans son architecture et son agencement de calcul nécessite un temps d'exécution pour une telle opération de 0,32 ms. Il permet donc un gain de l'ordre de 100 par rapport à un processeur de puissance de calcul 20 Mips et un gain de 10 par rapport à un co-processeur de type RAPID. On notera cependant que ces résultats sont à pondérer du fait que dans le co-processeur de type RAPID et dans l'architecture proposée on ne tient pas compte de la phase initiale de hachage précédemment mentionnée. Cependant l'adjonction d'un circuit conforme à l'objet de la présente invention à un processeur de puissance de calcul de 20 Mips serait susceptible d'améliorer les performances globales de celui-ci lors d'applications à des bases de données d'un facteur 20.

## Revendications

1. Procédé de traitement de signaux numériques représentatifs de vecteurs ou tuples de même dimension p, le traitement devant être effectué entre couples de vecteurs Xi de composantes {xki} d'un premier ensemble de vecteurs R et de vecteurs Yi de composantes {yki} d'un deuxième ensemble de vecteurs S, ce traitement consistant à réaliser une rencontre des couples de vecteurs Xi,Yi en vue d'effectuer une mise en présence des composantes de même ordre k {xki} ; {yki} et un calcul sur lesdites composantes, caractérisé en ce que ledit procédé consiste :

   - à attribuer à l'un des ensembles de vecteurs R la qualité de données spatiales de rencontre, correspondant à une succession temporelle de vecteurs de données spatiales de rencontre Rk formés soit par lesdits vecteurs Xi ou leurs composantes {xki} soit par un arrangement desdits vecteurs Xi ou de leurs composantes,
   - à attribuer à l'autre ensemble de vecteurs S la qualité de données d'entrée, ces données d'entrée étant formées à partir d'au moins un vecteur Yi dudit autre ensemble de vecteurs S ou par leurs composantes {yki} correspondantes,
   - à effectuer une rencontre spatiale et temporelle des données d'entrée et des données spatiales de rencontre selon un traitement parallèle, ledit traitement parallèle étant organisé selon un réseau bidimensionnel (RE) de cellules de traitement desdites composantes {xki} respectivement {yki}, à l'une des dimensions (x) dudit réseau bidimensionnel étant affectée ladite succession temporelle de vecteurs de données spatiales de rencontre Rk et à l'autre dimension (y) dudit réseau bidimensionnel étant affectées les données d'entrée formées par au moins ledit vecteur Yi ou par ses composantes correspondantes {yki}.

2. Procédé selon la revendication 1, caractérisé en ce que les dites données d'entrée sont formées à partir de n vecteurs Yi, i ∈ [1,n], à ladite autre dimension (y) dudit réseau bidimensionnel de cellules de traitement étant affectées les composantes {yki} formant un vecteur de données d'entrée, ledit réseau bidimensionnel de cellules de traitement comportant n cellules de traitement selon ladite autre dimension (y).

3. Procédé selon la revendication 1 ou 2, caractérisé en ce que chaque vecteur de données spatiales de rencontre Rk est formé par un vecteur Xi de dimension p, à ladite dimension (x) dudit réseau bidimensionnel de cellules de traitement étant affectées les composantes {xki} formant ledit vecteur de données spatiales de rencontre Rk, ledit réseau bidimensionnel (RE) de traitement comportant selon ladite dimension (x) p cellules de traitement (CT).

4. Procédé selon la revendication 1 ou 2, caractérisé en ce que chaque vecteur de données spatiales de rencontre Rk est formé par un arrangement des composantes {xki} d'une pluralité de q vecteurs Xi, i ∈ [1,q], la suite temporelle de vecteurs de données spatiales de rencontre Rk étant formée par les composantes correspondantes {xki} des vecteurs Xi, ledit réseau bidimensionnel de traitement comportant selon ladite dimension (x) q cellules de traitement.

5. Procédé selon la revendication 3, caractérisé en ce que ledit réseau bidimensionnel (RE) comportant n.p cellules de traitement arrangées en p lignes et n colonnes, ladite rencontre entre deux vecteurs Xi,Yi est conduite dans une colonne desdites cellules de traite; ment, chaque cellule de traitement (CT) délivrant à la cellule de traitement d'ordre immédiatement supérieur de la même colonne un résultat de traitement intermédiaire, la cellule de traitement d'ordre p de chaque colonne délivrant un résultat de traitement final pour un couple de vecteurs Xi,Yi donné.

6. Procédé selon la revendication 4, caractérisé en ce que ledit réseau bidimensionnel comportant n.q cellules de traitement arrangées en q lignes et n colonnes, ladite rencontre entre deux vecteurs Xi,Yi est conduite localement au niveau d'une cellule de traitement, par traitement des p composantes correspondantes {xki} , {yki} .

7. Procédé selon l'une des revendications précédentes, caractérisé en ce que, afin d'assurer une rencontre entre macro-vecteurs de dimension quelconque, le procédé consiste en outre à effectuer une pluralité de rencontres entre vecteurs partition de dimension p desdits macro-vecteurs, tout vecteur résultant de ladite partition et présentant une dimension inférieure à p étant complété par des composantes de valeur arbitraire.

8. Procédé selon l'une des revendications précédentes, caractérisé en ce que en vue d'effectuer la rencontre de deux ensembles R,S de cardinalité quelconque selon un processus séquentiel, ledit procédé comporte :

   - une étape (1000) de mémorisation séparée des vecteurs desdits ensembles R et S,
   - une étape (1001) de mémorisation d'une partition Rv, Su des ensembles R et S, Rv et Su étant des sous-ensembles de même cardinalité,
   - une étape (1002) de mémorisation de Rv et Sub, Sub étant sous-ensemble de Su et sous-ensemble d'ordre 2 de S, en liaison directe avec le réseau bidimensionnel RE dans les plans mémoire de travail 10 respectivement 20,
   - une étape (1003) de rencontre spatiale et temporelle des sous-ensembles Rv et Sub pendant un microcycle,
   - une étape (1004) de mémorisation simultanée pendant le microcycle, du sous-ensemble Sub+1 de rang supérieur dans un plan mémoire auxiliaire identique au plan mémoire de travail, appelé plan fantôme (21),
   - une étape de répétition des étapes (1002), (1003), (1004) pour tous les sous-ensembles d'ordre 2 Sub de S, pendant la durée d'un macrocycle et de mémorisation simultanée du sous-ensemble Rv+1 de R dans le plan fantôme (11),
   - une étape (1006) de répétition pour tous les sous-ensembles Su de S selon une succession de macrocycles,
   - une étape (1007) de répétition pour tous les sous-ensembles Rv de R, ce qui permet d'assurer la rencontre de tous les vecteurs des ensembles R, S.

9. Circuit de traitement de signaux numériques représentatifs de vecteurs ou tuples de même dimension p, le traitement devant être effectué entre couples de vecteurs Xi de composantes {xki} d'un premier ensemble de vecteurs R et de vecteurs Yi de composantes {yki} d'un deuxième ensemble de vecteurs S, ce traitement consistant à réaliser une rencontre des couples de vecteurs Xi,Yi en vue d'effectuer une mise en présence des composantes de même ordre k {xki}; {yki} et un calcul sur lesdites composantes, caractérisé en ce que ledit circuit comprend :

   - des premiers moyens (1) de mémorisation de l'un des ensembles de vecteurs R sous forme de données spatiales de rencontre, ces données spatiales de rencontre mémorisées étant susceptibles d'être lues selon une succession temporelle de vecteurs de données spatiales de rencontre Rk formés soit par lesdits vecteurs Xi ou leurs composantes {xki} soit par un arrangement desdits vecteurs Xi ou de leurs composantes,
   - des deuxièmes moyens (2) de mémorisation de l'autre ensemble de vecteurs S sous forme de données d'entrée, ces données d'entrée étant formées à partir d'au moins un vecteur Yi dudit autre ensemble S de vecteurs ou de leurs composantes {yki} correspondantes,
   - des moyens (3) de calcul permettant d'effectuer une rencontre spatiale et temporelle des données d'entrée et des données spatiales de rencontre selon un traitement parallèle, lesdits moyens de calcul étant constitués en un réseau bidimensionnel (RE) de cellules de traitement desdites composantes {xki} ou respectivement {yki} , ladite succession temporelle de vecteurs de données spatiales de rencontre Rk étant affectée à l'une des dimensions (x) dudit réseau bidimensionnel et lesdites données d'entrée étant affectées à l'autre dimension (y) de ce réseau.

10. Circuit selon la revendication 9, caractérisé en ce que lesdits premiers (1) et deuxièmes (2) moyens de mémorisation comportent chacun :

   - un plan mémoire de travail (10,20) dans lequel est mémorisé un sous ensemble de vecteurs correspondants en cours de traitement, ledit plan mémoire de travail (10,20) étant directement interconnecté selon une interconnexion parallèle aux cellules de traitement (CT) du réseau bidimensionnel selon la dimension d'affectation (x,y) des données correspondantes,

- un plan mémoire "fantôme" (11,21) interconnecté d'une part à une mémoire de masse (4) et d'autre part respectivement audit plan mémoire de travail (10,20), ledit plan mémoire fantôme (11,21) agissant comme mémoire auxiliaire du plan mémoire de travail pour un sous ensemble de vecteurs correspondants d'ordre supérieur pendant le traitement dudit sous ensemble de vecteurs correspondants.

11. Circuit selon l'une des revendications 9 ou 10, caractérisé en ce que ledit réseau bidimensionnel constituant lesdits moyens (3) de calcul comprend une pluralité de processeurs élémentaires (PE) constituant les cellules de traitement (CT), ledit réseau bidimensionnel étant organisé en une aire rectangulaire permettant d'assurer la rencontre d'une pluralité de vecteurs du premier ensemble R et d'une pluralité de vecteurs du deuxième ensemble S.

12. Circuit selon l'une des revendications 9 à 11 précédentes, caractérisé en ce que ledit plan mémoire de travail (20) dans lequel est mémorisé un sous ensemble de vecteurs de l'autre ensemble de vecteurs S est organisé de façon à réaliser une mémorisation des composantes {yki} desdits vecteurs Yi correspondants dans des cellules mémoire (CM) selon un adressage en ligne et colonne, chaque vecteur Yi étant mémorisé sur une colonne et ledit plan mémoire de travail (20) comportant n colonnes pour assurer la mémorisation de n vecteurs Yi, chaque ligne comportant n composantes {yki} constituant lesdites données d'entrée.

13. Circuit selon la revendication 12, caractérisé en ce que la taille Tr en nombre de cellules de mémorisation (CM) du plan mémoire fantôme (11) ou du plan mémoire de travail (10) relatif à l'ensemble R vérifie la relation :

$$Tr = \frac{N \cdot p}{Ny}$$

dans laquelle :

N    désigne le nombre de processeurs élémentaires (PE) constituant le réseau bidimensionnel (RE),

p    désigne la dimension des vecteurs,

Ny   désigne le débit de mémorisation dans les dits plans mémoire en nombre de composantes des vecteurs par cycle d'horloge.

14. Circuit selon la revendication 12, caractérisé en ce que selon une première configuration de type présentation séquentielle-distribution parallèle, ledit réseau bidimensionnel (RE) comprend n.p processeurs élémentaires arrangés en p lignes et n colonnes, chaque cellule mémoire de la première ligne du plan mémoire de travail (20) étant interconnectée à toutes les cellules de traitement (CT) et au processeur élémentaire (PE) correspondant par l'intermédiaire d'un BUS,ledit plan mémoire de travail (10) dans lequel sont mémorisés les vecteurs données spatiales de rencontre Rk étant organisé de façon à réaliser une mémorisation des composantes {xki} desdits vecteurs Xi correspondants dans des cellules mémoires selon un adressage en ligne et colonne, chaque vecteur Xi étant mémorisé sur une colonne un vecteur de donnée spatiales de rencontre Rk correspondant à un vecteur Xi, chaque cellule mémoire (CM) de la première colonne du plan mémoire de travail (10) étant interconnectée à toutes les cellules de traitement (CT) et au processeur élémentaire (PE) correspondant par l'intermédiaire d'un BUS.

15. Circuit selon la revendication 14, caractérisé en ce que ledit plan mémoire de travail (10) comprend n.p colonnes de cellules mémoire (CM) permettant la mémorisation de n.p vecteurs Xi.

16. Circuit selon la revendication 14, caractérisé en ce que selon une deuxième configuration de type présentation parallèle-distribution parallèle, ledit réseau bidimensionnel comprend n.q processeurs élémentaires (PE) arrangés en q lignes et n colonnes, ledit plan mémoire de travail (10) dans lequel sont mémorisés les vecteurs données spatiales de rencontre Rk étant organisé de façon à réaliser une mémorisation des composantes {xki} desdits vecteurs Xi Correspondants dans des cellules mémoires (CM) selon un adressage en ligne et colonne chaque vecteur Xi étant mémorisé sur une ligne et chaque ligne comportant n vecteurs, chaque vecteur de données spatiales de rencontre Rk étant constitué à partir des composantes {xki} de même ordre k de q vecteurs mémorisés sur q lignes adjacentes.

17. Circuit selon l'une des revendications 9 à 16, caractérisé en ce que, en vue de réaliser un traitement de type produit matrice-vecteur, matrice A de dimension $n^2$ et vecteur X de dimension n, lesdits moyens de calcul sont constitués en un réseau de cellules de traitement comportant une seule colonne comportant n cellules de traitement formant un opérateur (0), chaque cellule de traitement comportant un multiplieur (100) et un additionneur (101), les composantes xj avec j∈[1,n] desdits vecteurs X étant introduites séquentiellement et les coefficients aij avec i,j ∈ [1,n] de la matrice A étant chargés dans le plan fantôme (11) respectivement le plan de travail (10) desdits moyens de mémorisation (1).

**18.** Circuit selon la revendication 17, caractérisé en ce que, en vue de réaliser un traitement de type produit matrice-vecteur, matrice A de dimension $N^2$ et vecteur X de dimension N, avec N>>n et N=K.n, lesdits moyens de calcul (3) comportent K opérateurs (01 à OK) en cascade travaillant en parallèle, ledit vecteur X étant décomposé en ses composantes en K parties égales ou sous vecteurs de dimension n, notés X(1), X(2), ... X(j)...X(K), ladite matrice A étant décomposée en $K^2$ sous matrices A(i,j) de dimension $n^2$ avec i,j ∈[1,K], le vecteur résultat du produit noté Y(i) étant obtenu sous la forme

$$Y(i) = \sum_{j=1}^{K} A(i,j).X(j)$$

où A(i,j).X(j) désigne le produit de la sous-matrice A(i,j) de dimension $n^2$ et du vecteur X(j) de dimension n, Y(i) désignant la $i^{ème}$ partie ou sous vecteur du vecteur résultat Y.

**19.** Circuit selon la revendication 17, caractérisé en ce que, en vue de réaliser un'traitement de type produit matrice-vecteur, matrice A' de dimension N.M avec N= K.n et M= m.n et vecteur X' de dimension M, lesdits moyens de calcul (3) comportent K opérateurs en cascade travaillant en parallèle, ledit vecteur X' étant divisé en m parties ou sous vecteurs de dimension n notées X'(1), X'(2)... X'(m) et la matrice A' étant décomposée en K.m matrices de dimension $n^2$ notées A'(i,j) avec i∈[1,K] et j∈[1,m].

**20.** Circuit selon l'une des revendications 9 à 16, caractérisé en ce que, afin d'assurer la mise en oeuvre d'un processus de comparaison de deux relations d'une base de données, chaque relation étant constituée d'un ensemble de tuples formés chacun d'une pluralité d'attributs, la comparaison pouvant être effectuée suite à une procédure de hachage, la comparaison de deux ensembles de grande cardinalité étant transformée en une suite de comparaisons élémentaires de sous ensembles de petite cardinalité, chaque cellule de traitement constitutive des moyens de calcul (3), afin de réaliser une comparaison élémentaire, est constituée par un processeur élémentaire comportant :

- un comparateur numérique (200) permettant de répondre aux tests "R.A = S.A", "R.A<S.A" où R.A et S.A sont soit des attributs soit des parties d'attributs,
- une unité de contrôle programmable (201) laquelle permet de répondre à l'un des tests suivants "R.A<S.A", "R.A=<S.A", "R.A=S.A", "R.A>=S.A" ou "R.A>S.A", ladite unité de contrôle programmable délivrant un bit résultat de valeur 1 sur réponse positive au test considéré et un bit résultat de valeur o dans le cas contraire,
- une unité programmable (202) permettant de recombiner ledit bit résultat délivré par ladite unité de contrôle programmable pour le test considéré avec un bit résultat intermédiaire antérieur.

**21.** Circuit selon l'une des revendications 9 à 20, caractérisé en ce qu'il fait partie d'un système comportant : une pluralité de circuits C1 à Ck connectés en parallèle, chaque circuit recevant respectivement au niveau de ses plans mémoires de travail (10) et plan fantôme (11) une partition R'1, R'2... R'k de l'ensemble (R) des vecteurs de données de rencontre spatiale, lesdits plans mémoire de travail et plan mémoire fantôme (20,21) recevant en parallèle les vecteurs de données d'entrée S, ce qui permet d'augmenter la cardinalité des ensembles de tuples de données de rencontre spatiale traités sans modification de débit, pour un même temps de traitement.

**22.** Utilisation d'un circuit selon l'une des revendications 9 à 21, pour la mise en oeuvre d'un système de traitement de signaux numériques représentatifs de vecteurs ou de tuples d'une base de données.

**Patentansprüche**

**1.** Verfahren zur Verarbeitung von numerischen Signalen, die repräsentativ für Vektoren oder Tupel gleicher Dimension p sind, wobei die Verarbeitung zwischen Paaren von Vektoren Xi von Komponenten {xki} einer ersten Menge R von Vektoren und von Vektoren Yi von Komponenten (yki) einer zweiten Menge S von Vektoren durchgeführt wird, wobei diese Verarbeitung darin besteht, die Vektorpaare Xi, Yi aufeinandertreffen zu lassen im Hinblick auf eine Durchführung einer Gegenüberstellung von Komponenten gleicher Ordnung k {xki}; {yki} und einer Berechnung an diesen Komponenten, **dadurch gekennzeichnet,** daß das Verfahren darin besteht,

- daß man der einen der Mengen von Vektoren R die Qualität von Daten des räumlichen Aufeinandertreffens entsprechend einer zeitlichen Folge von Vektoren von Daten des räumlichen Aufeinandertreffens Rk zuordnet, die entweder durch die Vektoren Xi oder ihre Komponenten {xki} oder durch eine Anordnung der Vektoren Xi oder ihrer Komponenten gebildet sind,
- daß man der anderen Menge von Vektoren S die Qualität von Eingangsdaten zuordnet, wobei diese Eingangsdaten aus wenigstens einem Vektor Yi der anderen Menge von Vektoren S oder durch ihre entsprechenden Komponenten {yki} gebildet sind,
- daß man ein räumliches und zeitliches Aufeinandertreffen der Eingangsdaten und der Daten des räumlichen Aufeinandertreffens mit einer parallelen Verarbeitung durchführt, wobei die parallele Verarbeitung organisiert ist gemäß einemzweidimensionalen Netz (RE) von Zellen zur Verarbeitung der Komponenten {xki} bzw. {yki}, wobei der einen der Dimensionen (x) des zweidimensionalen Netzes die zeitliche Folge von Vektoren der Daten des räumlichen Aufeinandertreffens Rk zugewiesen wird und der anderen Dimension (y) des zweidimensionalen Netzes die Eingangsdaten zugewiesen werden, die aus wenigstens dem Vektor Yi oder aus seinen entsprechenden Komponenten {yki} gebildet sind.

2. Verfahren nach Anspruch 1, **dadurch gekennzeichnet,** daß die Eingangsdaten aus n Vektoren Yi mit i ∈[1,n] gebildet sind, wobei der anderen Dimension y des zweidimensionalen Netzes von Verarbeitungszellen die einen Vektor von Eingangsdaten bildenden Komponenten {yki} zugewiesen werden, wobei das zweidimensionale Netz von Verarbeitungszellen n Verarbeitungszellen entsprechend der anderen Dimension (y) umfaßt.

3. Verfahren nach Anspruch 1 oder 2, **dadurch gekennzeichnet,** daß jeder Vektor von Daten des räumlichen Aufeinandertreffens Rk durch einen Vektor Xi der Dimension p gebildet wird, wobei der Dimension (x) des zweidimensionalen Netzes von Verarbeitungszellen die den Vektor der Daten des räumlichen Aufeinandertreffens Rk bildenden Komponenten {xki} zugewiesen werden, wobei das zweidimensionale Netz (RE) zur Verarbeitung p Verarbeitungszellen (CT) entsprechend der Dimension (x) umfaßt.

4. Verfahren nach Anspruch 1 oder 2, **dadurch gekennzeichnet,** daß jeder Vektor von Daten des räumlichen Aufeinandertreffens Rk durch eine Anordnung der Komponenten {xki} einer Mehrzahl von q Vektoren Xi mit i∈[1,q] gebildet wird, wobei die zeitliche Folge von Vektoren von Daten des räumlichen Aufeinandertreffens Rk durch die entsprechenden Komponenten {xki} der Vektoren Xi gebildet wird, wobei das zweidimensionale Netz zur Verarbeitung q Verarbeitungszellen entsprechend der Dimension (x) umfaßt.

5. Verfahren nach Anspruch 3, **dadurch gekennzeichnet,** daß das zweidimensionale Netz (RE) n.p Verarbeitungszellen umfaßt, die in p Zeilen und n Spalten angeordnet sind, wobei das Aufeinandertreffen zwischen zwei Vektoren Xi, Yi in einer Spalte der Verarbeitungszellen durchgeführt wird, wobei jede Verarbeitungszelle (CT) ein Zwischenergebnis der Verarbeitung an die Verarbeitungszelle nächsthöherer Ordnung der gleichen Spalte ausgibt, wobei die Verarbeitungszelle der Ordnung p jeder Spalte ein Endergebnis der Verarbeitung für ein gegebenes Paar von Vektoren Xi, Yi ausgibt.

6. Verfahren nach Anspruch 4, **dadurch gekennzeichnet,** daß das zweidimensionale Netz n.q Verarbeitungszellen umfaßt, die in q Zeilen und n Spalten angeordnet sind, wobei das Aufeinandertreffen zwischen zwei Vektoren Xi, Yi lokal im Bereich einer Verarbeitungszelle durch Verarbeitung von p entsprechenden Komponenten {xki}, {yki} durchgeführt wird.

7. Verfahren nach einem der vorangegangenen Ansprüche, **dadurch gekennzeichnet,** daß zur Gewährleistung eines Aufeinandertreffens zwischen Makrovektoren beliebiger Dimension das Verfahren außerdem darin besteht, daß eine Mehrzahl von Aufeinandertreffen zwischen Teilvektoren der Dimension p der Makrovektoren durchgeführt wird, wobei jeder Vektor, der aus der Teilung resultiert und eine Dimension kleiner als p aufweist, durch Komponenten beliebigen Werts vervollständigt wird.

8. Verfahren nach einem der vorangegangenen Ansprüche, **dadurch gekennzeichnet,** daß im Hinblick auf die Durchführung des Aufeinandertreffens der zwei Mengen R, S beliebiger Mächtigkeit gemäß einem sequentiellen Prozeß das Verfahren umfaßt:

- einen Schritt (1000) zur separaten Speicherung der Vektoren der Mengen R und S,
- einen Schritt (1001) zur Speicherung einer Partition Rv, Su der Mengen R und S, wobei Rv und Su Teilmengen gleicher Mächtigkeit sind,
- einen Schritt (1002) zur Speicherung von Rv und Sub, wobei Sub eine Teilmenge von Su und eine Teilmenge der Ordnung 2 von S ist, in direkter Verbindung mit dem zweidimensionalen Netz RE in den Arbeitsspeicherebenen 10 bzw. 20,
- einen Schritt (1003) des räumlichen und zeitlichen Aufeinandertreffens der Teilmengen Rv und Sub während eines Mikrozyklus, - einen Schritt (1004) der gleichzeitigen Speicherung während des Mikrozyklus der Teilmenge Sub + 1 höherer Rangstufe in einer zur Arbeitsspeicherebene identischen Hilfsspeicherebene, genannt Phantomebene (21),
- einen Schritt der Wiederholung der Schritte (1002), (1003), (1004) für alle Teilmengen der Ordnung 2 Sub von S während der Dauer eines Makrozyklus und der gleichzeitigen Speicherung der Teilmenge Rv +1 von R in der Phantomebene (11),
- einen Schritt (1006) der Wiederholung für alle Teilmengen Su von S entsprechend einer Folge von Makrozyklen,
- einen Schritt (1007) der Wiederholung für alle Teilmengen Rv von R, was es erlaubt, das Aufeinandertreffen aller Vektoren der Mengen R, S sicherzustellen.

9. Schaltung zur Verarbeitung numerischer Signale, die repräsentativ für Vektoren oder Tupel von gleicher Dimension p sind, wobei die Verarbeitung zwischen Paaren von Vektoren Xi von Komponenten {xki} einer ersten Menge R von Vektoren und von Vektoren Yi von Komponenten {yki} einer zweiten Menge S von Vektoren durchzuführen ist, wobei diese Verarbeitung darin besteht, die Paare von Vektoren Xi, Yi aufeinandertreffen zu lassen im Hinblick auf die Durchführung einer Gegenüberstellung der Komponenten der gleichen Ordnung k {xki}; {yki} und einer Berechnung an diesen Komponenten, **dadurch gekennzeichnet,** daß die Schaltung umfaßt:

- erste Speichermittel (1) zum Speichern von einer der Mengen von Vektoren R in Form von Daten des räumlichen Aufeinandertreffens, wobei diese gespeicherten Daten des räumlichen Aufeinandertreffens dazu geeignet sind, entsprechend einer zeitlichen Folge von Vektoren von Daten des räumlichen Aufeinandertreffens Rk gelesen zu werden, die entweder durch die Vektoren Xi oder ihre Komponenten {xki} oder durch eine Anordnung der Vektoren Xi oder ihrer Komponenten gebildet sind,
- zweite Speichermittel (2) zum Speichern der anderen Menge von Vektoren S in Form von Eingangsdaten, wobei diese Eingangsdaten aus wenigstens einem Vektor Yi der anderen Menge von Vektoren S oder von ihren entsprechenden Komponenten {yki} gebildet werden,
- Berechnungsmittel (3), die das Durchführen eines räumlichen und zeitlichen Aufeinandertreffens der Eingangsdaten und der Daten des räumlichen Aufeinandertreffens mit einer parallelen Verarbeitung erlauben, wobei die Berechnungsmittel in einem zweidimensionalen Netz (RE) von Zellen zur Verarbeitung der Komponenten {xki} bzw. {yki} gebildet sind, wobei die zeitliche Folge von Vektoren von Daten des räumlichen Aufeinandertreffens Rk einer der Dimensionen (x) des zweidimensionalen Netzes zugewiesen wird und die Eingangsdaten der anderen Dimension (y) dieses Netzes zugewiesen werden.

10. Schaltung nach Anspruch 9, **dadurch gekennzeichnet**, daß die ersten Speichermittel (1) und die zweiten Speichermittel (2) jeweils umfassen:

- eine Arbeitsspeicherebene (10, 20), in der bei der Verarbeitung eine Teilmenge entsprechender Vektoren gespeichert ist, wobei die Arbeitsspeicherebene (10, 20) mit einer parallelen Verbindung direkt verbunden ist mit den Verarbeitungszellen (CT) des zweidimensionalen Netzes entsprechend der Zuweisungsdimension (x, y) der entsprechenden Daten,
- eine "Phantom"-Speicherebene (1 1, 21), die einerseits mit einem Massenspeicher (4) und andererseits jeweils mit der Arbeitsspeicherebene (10, 20) verbunden ist, wobei die Phantomspeicherebene (11, 21) während der Verarbeitung der Teilmenge von entsprechenden Vektoren für eine Teilmenge von Vektoren entsprechend höherer Ordnung wie ein Hilfsspeicher der Arbeitsspeicherebene wirkt.

11. Schaltung nach einem der Ansprüche 9 oder 10, **dadurch gekennzeichnet,** daß das die Berechnungsmittel (3) bildende zweidimensionale Netz eine Mehrzahl von Elementarprozessoren (PE) umfaßt, welche die Verarbeitungszellen (CT) bilden, wobei das zweidimensionale Netz in einer rechteckigen Fläche organisiert ist, was es erlaubt, das Aufeinandertreffen einer Mehrzahl von Vektoren der ersten Menge R und einer Mehrzahl von Vektoren der zweiten Menge S sicherzustellen.

12. Schaltung nach einem der vorangegangenen Ansprüche 9 bis 11, **dadurch gekennzeichnet,** daß die Arbeitsspeicherebene (20), in der eine Teilmenge von Vektoren der anderen Menge S von Vektoren gespeichert ist, derart organisiert ist, daß eine Speicherung der Komponenten {yki} der entsprechenden Vektoren Yi in Speicherzellen (CM) gemäß einer Adressierung nach Zeile und Spalte erfolgt, wobei jeder Vektor Yi in einer Spalte gespeichert ist und die Arbeitsspeicherebene (20) n Spalten umfaßt, um die Speicherung von n Vektoren Yi zu gewährleisten, wobei jede Zeile n Komponenten {yki} umfaßt, welche die Eingangsdaten bilden.

13. Schaltung nach Anspruch 12, **dadurch gekennzeichnet,** daß die Größe Tr als Anzahl von Speicherzellen (CM) der Phantomspeicherebene (11) oder der Arbeitsspeicherebene (10) bezüglich der Menge R die Beziehung:

$$Tr = \frac{N \cdot p}{Ny}$$

erfüllt, wobei:

N     N die Anzahl der Elementarprozessoren (PE) bezeichnet, die das zweidimensionale Netz (RE) bilden,
p     p die Dimension der Vektoren bezeichnet,
Ny     den Speicherdurchsatz in den Speicherebenen als Anzahl von Vektorkomponenten pro Taktzyklus bezeichnet.

14. Schaltung nach Anspruch 12, **dadurch gekennzeichnet,** daß gemäß einer ersten Gestaltung nach Art einer sequentiellen Präsentation und parallelen Verteilung das zweidimensionale Netz (RE) n.p Elementarprozessoren umfaßt, die in p Zeilen und n Spalten angeordnet sind, wobei jede Speicherzelle der ersten Zeile der Arbeitsspeicherebene (20) mit allen Verarbeitungszellen (CT) und mit dem entsprechenden Elementarprozessor (PE) mittels eines BUS verbunden ist, wobei die Arbeitsspeicherebene (10), in welcher die Vektoren von Daten des räumlichen Aufeinandertreffens Rk gespeichert sind, derart organisiert ist, daß eine Speicherung der Komponenten {xki} der entsprechenden Vektoren Xi in den Speicherzellen gemäß einer Adressierung nach Zeile und Spalte durchgeführt wird, wobei jeder Vektor Xi in einer Spalte gespeichert ist, wobei ein Vektor von Daten des räumlichen Aufeinandertreffens Rk einem Vektor Xi entspricht, wobei jede Speicherzelle (CM) der ersten Spalte der Arbeitsspeicherebene (10) mittels eines BUS mit allen Speicherzellen (CT) und dem entsprechenden Elementarprozessor (PE) verbunden ist.

15. Schaltung nach Anspruch 14, **dadurch gekennzeichnet,** daß die Arbeitsspeicherebene (10) n.p Spalten von Speicherzellen (CM) umfaßt, was die Speicherung von n.p Vektoren Xi erlaubt.

16. Schaltung nach Anspruch 14, **dadurch gekennzeichnet,** daß gemäß einer zweiten Gestaltung nach Art einer parallelen Präsentation und parallelen Verteilung das zweidimensionale Netz n.q Elementarprozessoren (PE) umfaßt, die in q Zeilen und n Spalten angeordnet sind, wobei die Arbeitsspeicherebene (10), in welcher die Vektoren von Daten des räumlichen Aufeinandertreffens Rk gespeichert sind, derart organisiert ist, daß eine Speicherung der Komponenten {xki} der entsprechenden Vektoren Xi in den Speicherzellen (CM) gemäß einer Adressierung nach Zeile und Spalte durchgeführt wird, wobei jeder Vektor Xi in einer Zeile gespeichert wird und jede Zeile n Vektoren umfaßt, wobei jeder Vektor der Daten des räumlichen Aufeinandertreffens Rk aus den Komponenten {xki} der gleichen Ordnung k von q Vektoren gebildet ist, die in q benachbarten Zeilen gespeichert sind.

17. Schaltung nach einem der Ansprüche 9 bis 16, **dadurch gekennzeichnet,** daß im Hinblick auf die Durchführung einer Verarbeitung der Art eines Matrix-Vektor-Produkts mit einer Matrix A der Dimension $n^2$ und einem Vektor X der Dimension n die Berechnungsmittel in einem Netz von Verarbeitungszellen gebildet sind, welches eine einzige Spalte aufweist, die n, einen Operator (O) bildende Verarbeitungszellen umfaßt, wobei jede Verarbeitungszelle einen Multiplizierer (100) und einen Addierer (101) aufweist, wobei die Komponenten xj mit j∈[1,n] der Vektoren X sequentiell eingeführt werden und die Koeffizienten aij mit i,j∈ [1,n] der Matrix A in die Phantomebene (11) bzw. die Arbeitsebene (10) der Speichermittel (1) geladen werden.

18. Schaltung nach Anspruch 17, **dadurch gekennzeichnet,** daß im Hinblick auf die Durchführung einer Verarbeitung nach Art eines Matrix-Vektor-Produkts mit einer Matrix A der Dimension $N^2$ und einem Vektor X der Dimension N, mit N > > n und N = K.n, die Berechnungsmittel (3) K Operatoren (O1 bis OK) in Kaskadenanordnung umfassen, die parallel arbeiten, wobei der Vektor X in seine Komponenten in K gleichen Teilen oder Teilvektoren der Dimension n zerlegt wird, die mit X(1), X(2),... X(j) ... X(K) bezeichnet sind, wobei die Matrix A in K$^2$ Teilmatrizen A(i,j) der Dimension n$^2$ mit i,j∈[1,K] zerlegt wird, wobei der als Y(i) bezeichnete Ergebnisvektor des Produkts in der Form

$$\mathcal{Y}(i) \quad = \quad \sum_{j=1}^{K} A(i,j).X(j)$$

erhalten wird, wobei A(i,j).X(j) das Produkt der Teilmatrix A(i,j) der Dimension n$^2$ mit dem Vektor X(j) der Dimension n bezeichnet, wobei Y(1) den i-ten Teil oder Teilvektor des Ergebnisvektors Y bezeichnet.

19. Schaltung nach Anspruch 17, **dadurch gekennzeichnet,** daß im Hinblick auf die Durchführung einer Verarbeitung nach Art eines Matrix-Vektor-Produkts mit einer Matrix A' der Dimension N.M mit N = K.n und M = m.n und einem Vektor X' der Dimension M die Berechnungsmittel (3) K Operatoren in Kaskadenanordnung umfassen, die parallel arbeiten, wobei der Vektor X' in m Teile oder Teilvektoren der Dimension n aufgeteilt wird, die als X'(1), X'(2) ... X'(m) bezeichnet sind, und die Matrix A' in K.m Matrizen der Dimension n$^2$ zerlegt wird, die mit A'(i,j) mit i∈[1,K] und j∈[1,m] bezeichnet sind.

20. Schaltung nach einem der Ansprüche 9 bis 16, **dadurch gekennzeichnet,** daß, zur Gewährleistung des Einsatzes eines Prozesses zum Vergleich zweier Relationen einer Datenbasis, jede Relation aus einer Menge von Tupeln gebildet ist, die jeweils aus einer Mehrzahl von Attributen gebildet sind, wobei der Vergleich in der Folge einer Zerhackprozedur durchzuführen ist, wobei der Vergleich zweier Mengen mit großer Mächtigkeit in eine Folge von Elementarvergleichen von Teilmengen mit kleiner Mächtigkeit umgewandelt wird, wobei jede die Berechnungsmittel (3) bildende Verarbeitungszelle zum Zwecke der Durchführung eines Elementarvergleichs durch einen Elementarprozessor gebildet ist, welcher umfaßt:

- einen numerischen Vergleicher (200), der es erlaubt, auf Prüfungen "R.A = S.A", "R.A < S.A" zu antworten, wobei R.A und S.A entweder Attribute oder Teile von Attributen sind,
- eine programmierbare Steuereinheit (201), welche es erlaubt, auf eine der folgenden Prüfungen "R.A < S.A", "R.A =< S.A", "R.A = S.A", "R.A > = S.A" oder "R.A > S.A" zu antworten, wobei die programmierbare Steuereinheit ein Ergebnisbit des Werts 1 bei positiver Antwort auf die betrachtete Prüfung und ein Ergebnisbit des Werts O im gegenteiligen Fall ausgibt,
- eine programmierbare Einheit (202), die es erlaubt, das für die betrachtete Prüfung von der programmierbaren Steuereinheit ausgegebene Ergebnisbit mit einem früheren Zwischenergebnisbit zu rekombinieren.

21. Schaltung nach einem der Ansprüche 9 bis 20, **dadurch gekennzeichnet,** daß sie einem System angehört, welches umfaßt: eine Mehrzahl von parallel verbundenen Schaltungen C1 bis Ck, wobei jede Schaltung im Bereich ihrer Arbeitsspeicherebenen (10) und Phantomebene (11) eine Partition R'1, R'2 ... R'k der Menge (R) von Vektoren der Daten des räumlichen Aufeinandertreffens empfängt, wobei die Arbeitsspeicherebene und die Phantomspeicherebene (20, 21) die Vektoren der Eingangsdaten S parallel empfangen, was es erlaubt, die Mächtigkeit von Mengen von Tupeln von verarbeiteten Daten des räumlichen Aufeinandertreffens ohne Änderung des Durchsatzes bei gleicher Verarbeitungszeit zu steigern.

22. Verwendung einer Schaltung gemäß einem der Ansprüche 9 bis 21 für den Einsatz eines Systems zur Verarbeitung von numerischen Signalen, die repräsentativ für Vektoren oder Tupel einer Datenbasis sind.

**Claims**

1. A method of processing digital signals representing vectors or tuples having the same dimension p, the processing being effected between pairs of vectors Xi of components {xki} of a first set of vectors R and vectors Yi of components {yki} of a second set of vectors S, the processing consisting in effecting a meeting between pairs of vectors Xi, Yi in order to bring together components of the same order k {xki}; {yki} and making a calculation based on the said components, characterised in that the method comprises:

- allocating the quality of spatial meeting data to one of the sets of vectors R, corresponding to a temporal sequence of spatial meeting data vectors Rk formed either by the said vectors Xi or their components {xki} or by an arrangement of the said vectors Xi or their components,

- allocating the quality of input data to the other set of vectors S, the input data being formed from at least one vector Yi of the other set of vectors S or by their corresponding components {yki}, and

- effecting a spatial and temporal meeting between the input data and the spatial meeting data by parallel processing, the parallel processing being organised in a bidimensional network (RE) of processing cells of the said components {xki} and {yki} respectively, one dimension (x) of the said bidimensional network being allocated the said temporal sequence of spatial meeting data vectors Rk and the other dimension (y) of the said bidimensional network being allocated the input data formed by at least the said vector Yi or by its corresponding components {yki}.

2. A method according to claim 1, characterised in that the said input data are formed from n vectors Yi, i ∈ [1,n], the said other dimension (y) of the said bidimensional network of processing cells being allocated the components {yki} forming an input data vector, the said bidimensional network of processing cells comprising n processing cells in the said other dimension (y).

3. A method according to claim 1 or 2, characterised in that each spatial meeting data vector Rk is formed by a vector Xi of dimension p, the said dimension (x) of the said bidimensional network of processing cells being allocated the components {xki} forming the said spatial meeting data vector Rk, the said bidimensional processing network (RE) comprising p processing cells (CT) in the said dimension (x).

4. A method according to claim 1 or 2, characterised in that each spatial meeting data vector Rk is formed by an arrangement of the components {xki} of a plurality of q vectors Xi, i ∈ [1,q], the temporal series of spatial meeting data vectors Rk being formed by the corresponding components {xki} of the vectors Xi, the said bidimensional processing network comprising q processing cells in the said dimension (x).

5. A method according to claim 3, characterised in that when the said bidimensional network (RE) comprises n.p processing cells arranged in p lines and n columns, the said meeting between two vectors Xi, Yi is effected in a column of the said processing cells, each processing cell (CT) supplying an intermediate processing result to the processing cell of immediately higher order in the same column, the p-order processing cell of each column delivering a final processing result for a given pair of vectors Xi, Yi.

6. A method according to claim 4, characterised in that when the said bidimensional network comprises n.q processing cells arranged in q lines and n columns, the said meeting between two vectors Xi, Yi is effected locally at the level of a processing cell, by processing of the p corresponding components {xki}, {yki}.

7. A method according to any of the preceding claims, characterised in that in order to ensure a meeting between macro-vectors of any dimension, the method also comprises effecting a plurality of meetings between divisional vectors of dimension p of the said macro-vectors, any vector resulting from the said division and having a dimension lower than p being supplemented by components of arbitrary value.

8. A method according to any of the preceding claims, characterised in that in order to effect the meeting between two sets R, S of any cardinality in a sequential process, the method comprises:

- a step (1000) for separate storage of the vectors of the said sets R and S,

- a step (1001) for storage of a division Rv, Su of the sets R and S, Rv and Su being sub-sets having the same cardinality,

- a step (1002) for storage of Rv and Sub, Sub being a sub-set of Su and a second-order sub-set of S, in direct conjunction with the bidimensional network RE in the working storage planes 10 and 20 respectively,

- a spatial and temporal meeting step (1003) between the sub-sets Rv and Sb during a microcycle,

- a step (1004) for simultaneous storage, during the microcycle, of the sub-set Sb+1 of higher rank in an auxiliary storage plane identical with the working storage plane and called a phantom plane (21)

- a step for repetition of the steps (1002), (1003), (1004) for all the second-order sub-sets Sub of S during a macro-cycle and for simultaneous storage of the sub-set Rv+1 of R in the phantom plane (11),

- a repetition step (1006) for all the sub-sets Su of S in a sequence of macro-cycles, and

- a repetition step (1007) for all the sub-sets Rv of R, thus ensuring a meeting of all the vectors of the sets R, S.

9. A circuit for processing digital signals representing vectors or tuples having the same dimension p, processing being effected between pairs of vectors Xi of components {xki} of a first set of vectors R and vectors Yi of components {yki} of a second set of vectors S, the processing consisting in effecting a meeting between pairs of vectors Xi, Yi in order to bring together components of the same order k {xki}; {yki} and making a calculation based on the said components, characterised in that the said circuit comprises:

- first means (1) for storing one of the sets of vectors R in the form of spatial meeting data, the stored spatial meeting data being readable in a temporal sequence of spatial meeting data vectors Rk formed either by the said vectors Xi or their components {xki} or by an arrangement of the said vectors Xi or of their components,

- second means (2) for storing the other set of vectors S in the form of input data, the input data being formed from at least one vector Yi of the other set S of vectors or from their corresponding components {yki},

- calculating means (3) for effecting a spatial and temporal meeting between the input data and the spatial meeting data by parallel processing, the said calculating means comprising a bidimensional network (RE) of processing cells of the said components {xki} or {yki} respectively, the said temporal sequence of spatial meeting data vectors Rk being allocated to one dimension (x) of the said bidimensional network and the said input data being allocated to the other dimension (y) of this network.

10. A circuit according to claim 9, characterised in that the said first (1) and second (2) storage means each comprise:

- a working memory plane (10, 20) in which a sub-set of corresponding vectors is stored during processing, the said working memory plane (10, 20) being directly interconnected in an interconnection parallel to the processing cells (CT) of the bidimensional network along the dimension (x,y) to which the corresponding data are allocated, and

- a "phantom" memory plane (11, 21) interconnected on the one hand to a mass memory (4) and on the other hand respectively to the said working memory plane (10, 20), the said phantom memory plane (11, 21) serving as an auxiliary memory of the working memory plane for a sub-set of corresponding vectors of higher order during processing of the said sub-set of corresponding vectors.

11. A circuit according to claim 9 or 10, characterised in that the said bidimensional network constituting the said calculating means (3) comprises a plurality of elementary processors (PE) constituting the processing cells (CT), the said bidimensional network being organised in a rectangular area for ensuring a meeting between a plurality of vectors in the first set R and a plurality of vectors in the second set S.

12. A circuit according to any of claims 9 to 11 hereinbefore, characterised in that the said working memory plane (20) in which a sub-set of vectors of the other set of vectors S is stored, is organised so as to store components {yki} of the said corresponding vectors Yi in memory cells (CM) with line and column addressing, each vector Yi being stored on a column and the said working memory plane (20) comprising n columns for storing n vectors Yi, each line comprising n components {yki} constituting the said input data.

13. A circuit according to claim 12, characterised in that the size Tr as regards number of storage cells (CM) in the phantom memory plane (11) or the working memory plane (10) relative to the set R conforms to the relation:

$$Tr = \frac{N. \, p}{Ny}$$

in which:

N denotes the number of elementary processors (PE) constituting the bidimensional network (RE),

p denotes the dimension of the vectors, and

Ny denotes the storage rate in the said memory planes as regards the number of vector components per clock cycle.

**14.** A circuit according to claim 12, characterised in that in a first sequential presentation-parallel distribution type configuration, the said bidimensional network (RE) comprises n.p elementary processors arranged in p lines and n columns, each memory cell in the first line of the working memory plane (20) being interconnected to all the processing cells (CT) and to the corresponding elementary processor (PE) by a BUS, the said working memory plane (10) in which the spatial meeting data vectors Rk are stored being organised for the purpose of storing the components {xki} of the said corresponding vectors Xi in memory cells with line and column addressing, each vector Xi being stored in a column, a spatial meeting data vector Rk corresponding to a vector Xi, each storage cell (CM) in the first column of the working memory plane (10) being interconnected to all the processing cells (CT) and to the corresponding elementary processor (PE) via a BUS.

**15.** A circuit according to claim 14, characterised in that the said working memory plane (10) comprises n.p columns of memory cells (CM) for storing n.p vectors Xi.

**16.** A circuit according to claim 14, characterised in that in a second parallel presentation-parallel distribution type configuration, the said bidimensional network comprises n.q elementary processors (PE) arranged in q lines and n columns, the said working memory plane (10) in which the spatial meeting data vectors Rk are stored being organised so as to store the components {xki} of the corresponding vectors Xi in memory cells (CM) with line and column addressing, each vector Xi being stored in a line and each line comprising n vectors, each spatial meeting data vector Rk being formed from the components {xki} of same order k of q vectors stored in q adjacent lines.

**17.** A circuit according to any of claims 9 to 16, characterised in that for the purpose of matrix-vector product type processing, the matrix A having the dimension $n^2$ and the vector X having the dimension n, the said calculating means comprise a network of processing cells comprising a single column comprising n processing cells forming an operator (O), each processing cell comprising a multiplier (100) and an adder (101), the components xj with $j\in$ [1,n] of the said vectors X being introduced sequentially and the coefficients aij with $i,j\in$[1,n] of the matrix A being loaded into the phantom plane (11) and the working plane (10) respectively of the said storage means (1).

**18.** A circuit according to claim 17, characterised in that, for the purpose of matrix-vector product type processing, the matrix A having the dimension $N^2$ and the vector X having the dimension N, with N>>n and N=K.n, the said calculating means (3) comprise K operators (01 to OK) in cascade operating in parallel, the said vector X being broken down into its components in K equal parts or sub-vectors having the dimension n, denoted X(1), X(2), ... X(j) ... X(K), the said matrix A being broken down into $K^2$ submatrices A(i,j) having the dimension $n^2$ with i,j [1,K], the result vector of the product denoted Y(i) being obtained in the form

$$ Y(i) \;=\; \sum_{j=1}^{K} A(i,j).X(j) $$

where A(i,j), X(j) denotes the product of the submatrix A(i, j) of dimension $n^2$ and of the vector X(j) of dimension n, and Y(i) denotes the $i^{th}$ part or subvector of the result vector Y.

**19.** A circuit according to claim 17, characterised in that for the purpose of matrix-vector product type processing, the matrix A having the dimension N.M with N = K.n and M = m.n and the vector X' having the dimension M, the said calculating means (3) comprise K operators in cascade operating in parallel, the said vector X' being divided into m parts or sub-vectors of dimension n denoted X' (1) X' (2) ... X' (m) and the matrix A' being broken down into K, m matrices of dimension $n^2$ denoted A'(i,j) with $i\in$[1,K] and $j\in$[1.m].

**20.** A circuit according to any of claims 9 to 16, characterised in that for the purpose of working a process of comparing two relations of a data base, each relation comprising a set of tuples each formed from a plurality of attributes, the

EP 0 461 030 B1

comparison being optionally made after a chopping process, the comparison between two sets of high cardinality being converted into a series of elementary comparisons of subsets of low cardinality, each processing cell in the calculating means (3), for the purpose of making an elementary comparison, is formed by an elementary processor comprising:

- a digital comparator (200) for satisfying the tests "R.A = S.A", "R.A<S.A" where R.A and S.A are either attributes or parts of attributes,

- a programmable monitoring unit (201) for satisfying one of the following tests "R.A<S.A", "R.A=<S.A", "R.A=S.A", "R.A>=S.A" or "R.A>S.A", the said programmable monitoring unit delivering a result bit of value 1 after a positive response to the test and a result bit of value 0 in the alternative case, and

- a programmable unit (202) whereby the said result bit delivered by the said programmable monitoring unit for the test in question is recombined with a previous intermediate result bit.

21. A circuit according to any of claims 9 to 20, characterised in that it forms part of a system comprising a plurality of circuits C1 to Ck connected in parallel, each circuit, at the level of its working memory planes (10) and phantom plane (11) respectively, receiving a division R'1, R'2 ... R'k of the set (R) of spatial meeting data vectors, the said working memory planes and the phantom memory plane (20, 21) receiving the input data vectors S in parallel, so as to increase the cardinality of the sets of tuples of processed spatial meeting data without modifying the flow rate, during the same processing time.

22. Use of a circuit according to any of claims 9 to 21 for working a system of processing digital signals representing vectors or tuples of a data base.

# FIG.1.

1 COMPOSANTE y/CYCLE

PLAN "FANTOME"

SOUS–ENSEMBLE
Su Yi {yki}

MEMORISATION

MEMORISATION

PLAN "FANTOME"

1 COMPO-
-SANTE x
CYCLE

ENSEMBLE
R
Xi , Rk
{xki}

| 1 | --- | --- | --- | n |
|---|---|---|---|---|
| 2 | | | | |
| | | | | |
| P,q | | | | |

RE

CT

x

y

a)

ENSEMBLE R

| S1 |
|---|
| Su |
| Sk |

SOUS ENSEMBLE Su
DE
S

b)

(R,S1)  (R,S2)  -------  (R,Sk)

MICROCYCLE

MACROCYCLE

c)

ENSEMBLE R

ENSEMBLE S/ SOUS ENSEMBLE
Su

| X1 |
|---|
| X2 |
| |
| ------ |
| |
| XN |

| Y1 |
|---|
| Y2 |
| |
| ------ |
| |
| YN |

$\underline{a}$)

| y1    y2 ...   yi   ... yk |
|---|

VECTEUR Y

| x1    x2  ... xi  ...   xk |
|---|

VECTEUR X

| f1 | f2 | fi | fk |
|---|---|---|---|

$f_i = f(x_i, y_i)$

| $F(f_1, f_2, ..., f_i, ..., f_k)$ |
|---|

$\underline{b}$)

# FIG.2.

FIG.3.

FIG.4.

# FIG.5a.

Ny COMPOSANTE /CYCLE

N x COMPOSANTES CYCLE

$np/N_y$

$n$

$(p,q)$

$p$

GENERALISATION DE L'EQUILIBRAGE DES PLANS MEMOIRE

EP 0 461 030 B1

ENSEMBLE R

ENSEMBLE S

GENERALISATION À DES TAILLES QUELCONQUES D'ENSEMBLES

# FIG.5b.

ENSEMBLE R

ENSEMBLE S

1 MACROCYCLE

GENERALISATION À DES DIMENSIONS QUELCONQUES DE VECTEURS

# FIG.5c.

# FIG.5d.

ENSEMBLE R                    ENSEMBLE S

UTILISATION DE z CIRCUITS EN PARALLELE

# FIG.5e.

ENSEMBLE R                    ENSEMBLE S

1 MACROCYCLE

UTILISATION DE W CIRCUITS EN CASCADE

FIG.5f.

MEMORISATION SEPAREE DES VECTEURS DE R ET S CARDINALITE QUELCONQUE — 1000

MEMORISATION D'UNE PARTITION Rv, Su DE R ET S Rv, Su DE MEME CARDINALITE — 1001

MEMORISATION DE Rv ET Sub, Sub SOUS ENSEMBLE DE Su D'ORDRE 2 EN LIAISON DIRECTE AVEC RE — 1002

RENCONTRE DE Ru, Sub — 1003

MEMORISATION SIMULTANEE DE Sub+1 D'ORDRE SUPERIEUR — 1004

REPETITION POUR TOUS LES SOUS ENSEMBLES Sub D'ORDRE 2 MEMORISATION SIMULTANEE DE Rv +1 — 1005

REPETITION POUR TOUS LES SOUS ENSEMBLES Su DE S — 1006

REPETITION POUR TOUS LES SOUS ENSEMBLES Rv DE R — 1007

FIN — 1008

REPETITION DE MACROCYCLES

MACROCYCLE

MICROCYCLE

34

PLAN FANTOME

1 COMPOSANTE/T

MATRICE A

n² COMPO--SANTES

CT

CT

CT

CT

a)

VECTEUR X'    VECTEUR X

x'3  x'2  x'1  x'0  x3  x2  x1  x0  BUS

a21 a11  a41 a31 a21 a11

a22 a12  a42 a32 a22 a12

A

a13  a43 a33 a23 a13

a44 a34 a24 a14

y'4  y'3  y'2  y'1  y4  y3  y2  y1

CT  102  100  101

3

31

CT

32

CT

3k

CT

3n

b)

Y1 = A.X1 | Y2 = A.X2 | _____ | Yn = A.Xn

MICROCYCLE = nT

c)

MACROCYCLE = n MICROCYCLES = n²T

FIG.6.

FIG.7a.

# FIG.7b.

ENTREE 01 $\underline{X1(1)}$ $\overset{A(1,1)}{\text{-----}}$ $\underline{Xn(1)}$ $\underline{X1(1)}$ $\overset{A(3,1)}{\text{-----}}$ $\underline{Xn(1)}$

ENTREE 02 $\overset{A(1,2)}{\underline{X1(2)}}$ $\text{-----}$ $\underline{Xn(2)}$ $\underline{X1(2)}$ $\overset{A(3,2)}{\text{-----}}$ $\underline{Xn(2)}$

SORTIE 02 $\overset{nT}{\longleftrightarrow}$ $\underline{Y1(1)}$ $\text{------}$ $\underline{Yn(1)}$ $\underline{Y1(3)}$ $\text{-----}$ $\underline{Yn(3)}$

ENTREE 03 $\underline{X1(1)}$ $\overset{A(2,1)}{\text{-----}}$ $\underline{Xn(1)}$ $\underline{X1(1)}$ $\overset{A(4,1)}{\text{----}}$ $\underline{Xn(1)}$

ENTREE 04 $\underline{X1(2)}$ $\overset{A(2,2)}{\text{-----}}$ $\underline{Xn(2)}$ $\underline{X1(2)}$ $\overset{A(4,2)}{\text{-----}}$ $\underline{Xn(2)}$

$\overset{n^2 T}{\longleftrightarrow}$

SORTIE 04 $\underline{Y1(2)}$ $\text{------}$ $\underline{Yn(2)}$ $\underline{Y1(4)}$ $\text{-----}$ $\underline{Yn(4)}$

37

# FIG.8a.

Bi+1    n    Bi+n

20
21
32 BITS
32 BITS

B1.8
B1.7
B1.6
B1.5
B1.4
B1.3
B1.2
B1.1

p

TAILLE D'UN ATTRIBUT: 32*P BITS

2

1    11    10

A1.8 ··· A1.3 A1.2 A1.1    PE
··· A1+1    PE
··· A1+2    PE
··· A1+3    PE

q

MEMOIRE

3    RE

p=LONGUEUR D'UN ATTRIBUT

A(i+(n_1)*q) --- Ai+8    Ai+4    Ai

n*p

# FIG.8b.

200

32
32

2

CONTROLE
201

1

CONTROLE
202

1

MEMOIRE

# FIG.8c.

**ETAPE 1**

B8
B7

B2
B1

A8 A7 ... A2 A1

A1=B1

A1=B1

ET

**ETAPE 2**

B1
B8

B3
B2

A'1 A8 ... A3 A2

A1=B1

A2=B2

ET

**ETAPE 8**

B7
B6

B1
B8

A'7 A'6 ... A'1 A8

A1=B1

A8=B8

ET

SORTIE DU RESULTAT
DE LA COMPARAISON
A = B

A1=B1 ET A2=B2 --- ET A7=B7

CASCADAGE DE DEUX CIRCUITS

DURANT LES 2n CYCLES DE
LA COMPARAISON, ON CHARGE
EN MEMOIRE LES 2n
ELEMENTS DE L'ENSEMBLE R'
DE L'OPERATION SUIVANTE A
RAISON 1 ELEMENT PAR
CYCLE

S COMPORTE
2n ELEMENTS
=> 2n CYCLES POUR
COMPARER R ET S

C1

S1

R'1

R1
(n ELEMENTS)

RESEAU
RE
DE PE

R'2

C2

# FIG.9.

R'k

S1

Ck

Rk
(n ELEMENTS)

RESEAU
RE
DE PE